# EUROPEAN PATENT APPLICATION

(11) **EP 2 690 545 A2**
(43) Date of publication of application: **29.01.2014**
(21) Application number: 13177621.3
(22) Date of filing: 23.07.2013
(51) Int. Cl.: G06F 3/06

(54) **Method and system for supporting cloud service and terminal for supporting the same**

(30) Priority: 23.07.2012 KR 20120079807
(71) Applicant: Samsung Electronics Co., Ltd, Gyeonggi-do 443-742 (KR)
(72) Inventor: Kim, Jinyong, 443-742 Gyeonggi-do (KR); Shin, Youngsun, 443-742 Gyeonggi-do (KR)
(74) Representative: Jenkins, Richard Gavin

(57) **Abstract**

Provided a method and a system for supporting a cloud service capable of providing a user environment specified in the cloud service, and a terminal for supporting the same. The system for supporting a cloud service includes: a cloud service device allowing a plurality of users to upload or download contents to or from at least one sharing box, or to generate memo contents; and a terminal outputting a content viewing menu displaying the contents according to types and characteristics of the contents so that the terminals users can manipulate and share the contents stored in the cloud service device.

## Description

### BACKGROUND

### Field of the Invention

The present disclosure relates to a cloud service, and more particularly, to a method and a system for supporting a cloud service capable of controlling a user environment specified in the cloud service, and a terminal for supporting the same.

### Description of the Related Art

A portable terminal provides various functions. For example, the portable terminal typically includes a camera, and separately stores and manages photographs captured by the camera or a photograph received from the outside for a subsequent retrieval. Further, the portable terminal stores and manages phone numbers of other terminals.

Meanwhile, a cloud service is provided to share contents stored in the portable terminal or a specific terminal. The cloud service enables various terminals to upload contents or download the contents through a communication channel. Recently, as the cloud service has been developed to various forms, various demands of users have been increased. Accordingly, there is a need to provide a cloud service environment that is a user-friendly.

### SUMMARY

The present invention has been made in view of the above problems and provides additional advantages, by providing a system and a method for supporting a cloud service capable of easily using a cloud service of various forms by configuring a cloud service environment in a user-friendly scheme, and a terminal for supporting the same.

In accordance with an aspect of the present invention, a system for supporting a cloud service, the system includes: a cloud service device allowing access by a plurality of terminal users to upload or download different contents to or from at least one sharing box having a sharing region; and a terminal, in communication with the cloud service device, receiving and outputting a content viewing menu displaying the contents stored in the cloud service device according to types and characteristics of the contents and manipulating the contents according to an input event.

In accordance with another aspect of the present invention, a method of controlling a user environment in a cloud service includes: allowing an access by a plurality of terminals to upload or download different contents to or from at least one sharing box of a cloud server; and providing a content viewing menu displaying the contents according to types and characteristics thereof in the plurality of terminals to manipulate the displayed contents according to an input event.

### BRIEF DESCRIPTION OF THE DRAWINGS

The above features and advantages of the present invention will be more apparent from the following detailed description in conjunction with the accompanying drawings, in which:
FIG. 1 is a schematic diagram illustrating a configuration of a system for supporting a cloud service according to an exemplary embodiment of the present invention;
FIG. 2 is a block diagram illustrating a configuration of a terminal shown in FIG. 1;
FIG. 3 is a block diagram illustrating a configuration of a cloud service device shown in FIG. 1;
FIG. 4 is a diagram illustrating a method of supporting a cloud service according to an exemplary embodiment of the present invention;
FIG. 5 is a conceptual diagram illustrating a content viewing menu provided from the cloud service device according to an exemplary embodiment of the present invention;
FIG. 6 is a schematic diagram illustrating a canvas view image among an example of the content viewing menu according to an exemplary embodiment of the present invention;
FIG. 7 is a diagram illustrating an interface of a timeline view form among the content viewing menu according to an exemplary embodiment of the present invention;
FIGS. 8, 9, 10, 11, 12, 13, 14 and 15 are diagrams illustrating display patterns of contents displayed on a content viewing menu provided from the cloud service device according to an exemplary embodiment of the present invention;
FIG. 16 is a diagram illustrating a state of a control menu output on the content viewing menu according to an exemplary embodiment of the present invention;
FIG. 17 is a diagram illustrating an environment providing a content selection menu on the content viewing menu according to an exemplary embodiment of the present invention;
FIG. 18 is a diagram illustrating support of an additional content selection menu on the content viewing menu according to an exemplary embodiment of the present invention;
FIG. 19 is a diagram illustrating an operation interface for viewing canvas view type contents according to an exemplary embodiment of the present invention;
FIG. 20 is a diagram illustrating an operation interface for viewing timeline view type contents according to an exemplary embodiment of the present invention;
FIG. 21 is a diagram illustrating display of newly added contents according to an exemplary embodiment of the present invention;
FIG. 22 is a diagram illustrating an interface associated with search of new contents according to an exemplary embodiment of the present invention;
FIG. 23 is a diagram illustrating generation of a share message among a content viewing function according to an exemplary embodiment of the present invention;
FIG. 24 is a diagram illustrating a procedure of inputting a text on the content viewing menu according to an exemplary embodiment of the present invention;
FIG. 25 is a diagram illustrating a preference display function on the content viewing menu according to an exemplary embodiment of the present invention;
FIG. 26 is a diagram illustrating a procedure of input description information in contents on the content viewing menu according to an exemplary embodiment of the present invention;
FIG. 27 is a diagram illustrating an interface displaying comments of a user on the content viewing menu according to an exemplary embodiment of the present invention;
FIGS. 28 and 29 are diagrams illustrating a hand-writing input on the content viewing menu according to an exemplary embodiment of the present invention;
FIGS. 30, 31, 32 and 33 are diagrams illustrating a zoom function operation of the content viewing menu according to an exemplary embodiment of the present invention;
FIG. 34 is a diagram illustrating movement of contents on the content viewing menu according to an exemplary embodiment of the present invention;
FIG. 35 is a diagram illustrating an example on which a plurality of layers is stereoscopically displayed as the content viewing menu according to an exemplary embodiment of the present invention;
FIG. 36 is a diagram illustrating an operation of a contents search result shown in FIG. 35;
FIG. 37 is a diagram illustrating an interface for describing a sandbox edition according to an exemplary embodiment of the present invention;
FIG. 38 is a diagram illustrating user addition for generating a sandbox according to an exemplary embodiment of the present invention;
FIG. 39 is a diagram illustrating change of a title of a sandbox according to an exemplary embodiment of the present invention;
FIG. 40 is a diagram illustrating deletion of a sandbox according to an exemplary embodiment of the present invention; and
FIGS. 41 and 42 are diagrams illustrating change execution of a sandbox group name according to an exemplary embodiment of the present invention.

### DETAILED DESCRIPTION

Exemplary embodiments of the present invention are described with reference to the accompanying drawings in detail. The same reference numbers are used throughout the drawings to refer to the same or like parts. For the purposes of clarity and simplicity, detailed descriptions of well-known functions and structures incorporated herein may be omitted to avoid obscuring the subj ect matter of the present invention. Further, some elements shown in the drawings may be exaggerated, omitted or schematically drawn for illustrative purposes, thus should not limit the scope of the present invention.

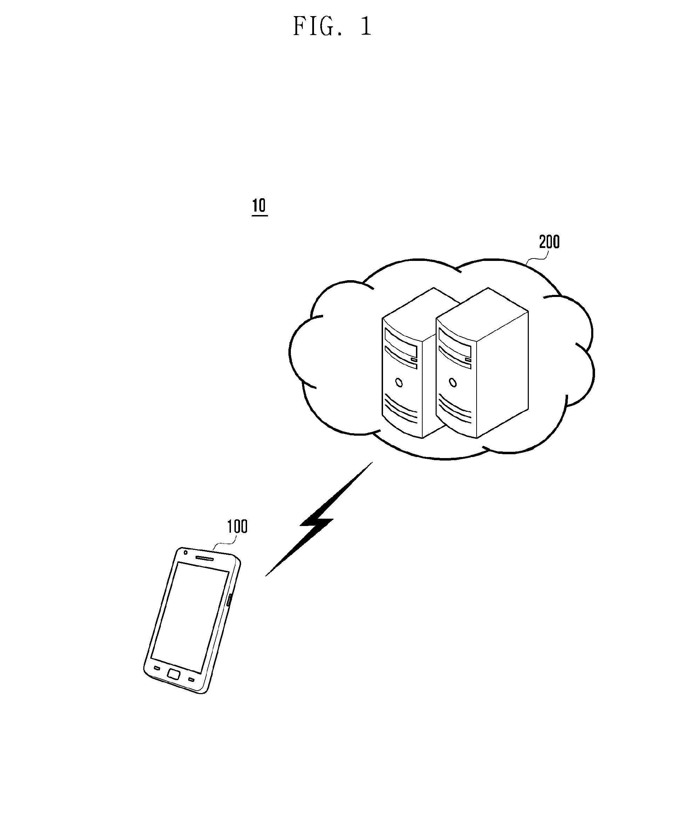

FIG. 1 is a schematic diagram illustrating a configuration of a system for supporting a cloud service according to an exemplary embodiment of the present invention.

Referring to FIG. 1, the system 10 for supporting a cloud service according to an exemplary embodiment of the present invention may include at least one terminal 100 and a cloud service device 200. The system 10 for supporting a cloud service may further include a network device for supporting data transception necessary for reading and confirming of contents, upload and download of the contents, and generation of the contents between the terminal 100 and the cloud service device 200. The network device may include a combination of various communication network devices capable of supporting a communication unit of the terminal 100 and the cloud service device 200.

The terminal 100 connects with the cloud service device 200 of the system 10 for supporting a cloud service, and during a connection, the contents stored in the cloud service device 200 can be easily identified and classified using a content viewing menu provided to the terminal 100 by the cloud service device 200. The content viewing menu may be named to a content viewing screen or a content reading picture. The content viewing menu can also be easily adjusted and navigated to perform other user functions. As a result, the user may intuitively and easily perform a user function associated with the content viewing menu, which includes and history and characteristics of contents, and detailed information of contents.

To this end, the terminal 100 establishes a communication connection with the cloud service device 200 and receives a content viewing menu displaying a plurality of different contents stored in the cloud service device 200. In this case, the content viewing menu may include a content viewing menu corresponding to an environment when at least one terminal uploads the contents in the cloud service device 200 and a content viewing menu designed in previously predefined criteria. That is, the content viewing menu may be an image where contents having various shapes may be arranged at a specific location according to a user preference or selection. In this case, the contents included in the content viewing menu may be displayed to have an image effect of various shapes and forms according to a usage history of users.

For example, the content viewing menu provided from the cloud service device 200 and output from the terminal 100 may display the respective contents of the content viewing menu to be at least partially grouped, and may be sequentially listed according to a predefined design scheme of the cloud service device 200 or according to a user setting. Further, the terminal 100 may provide various picture interfaces for supporting a zoom function of the content viewing menu, a moving function of the displayed contents, a resizing function of the displayed contents, a z-depth search and arrangement with respect to the contents, a content preference designation function, a menu for selectively controlling, adding, and selecting the contents, a report and search function of new contents, and a sandbox operation function for sharing the cloud service.

Further, the terminal 100 may generate contents according to a preset scheme in an environment where the foregoing content viewing menu is provided. For example, the terminal may generate memo contents by writing a predetermined memo in some of the contents displayed on the canvas region. In this case, the terminal 100 may generates and provide a memo content generation screen or receive and provide a memo contents generation screen generated by the cloud service device 200.

In operation, the cloud service device 200 allows connection of at least one terminal 100, and may supports a zoom function of a content viewing menu of the corresponding terminal 100, a moving function of the displayed contents, a resizing function of the contents, a z-depth search and arrangement with respect to the displayed contents, a content preference designation function, a menu for selectively controlling, adding, and selecting the contents, report and search function of new contents, a sandbox operation function for sharing the cloud service, and generation and search functions of memo contents. The cloud service device 200 may maintain and manage authentication information for authenticating the connection with the respective terminal 100. In particular, the cloud service device 200 may configure the content viewing menu and may provide the corresponding content viewing menu to the terminal 100. In this case, the cloud service device 200 may provide information about a form and a color on which contents included in the content viewing menu will be displayed, information about a location relation of respective contents, and location information on a canvas to which respective contents are arranged simultaneously with a provision of the content viewing menu. The cloud service device 200 may provide information obtained by reconfiguring or rearranging contents displayed on the content viewing menu according to various signals input from the terminal 100, and information configuring addition, deletion or correction of the contents according to generation of new contents to the terminal 100.

As described above, the system 10 for supporting a cloud service based according to the embodiment of the present invention may easily identify and classify respective contents in a cloud service environment, display the respective contents in various forms, and manipulate an image according to movement, addition, deletion, and correction of the contents. Accordingly, the present invention may rapidly and conveniently use the cloud service and may support a service suitable for a user preference.

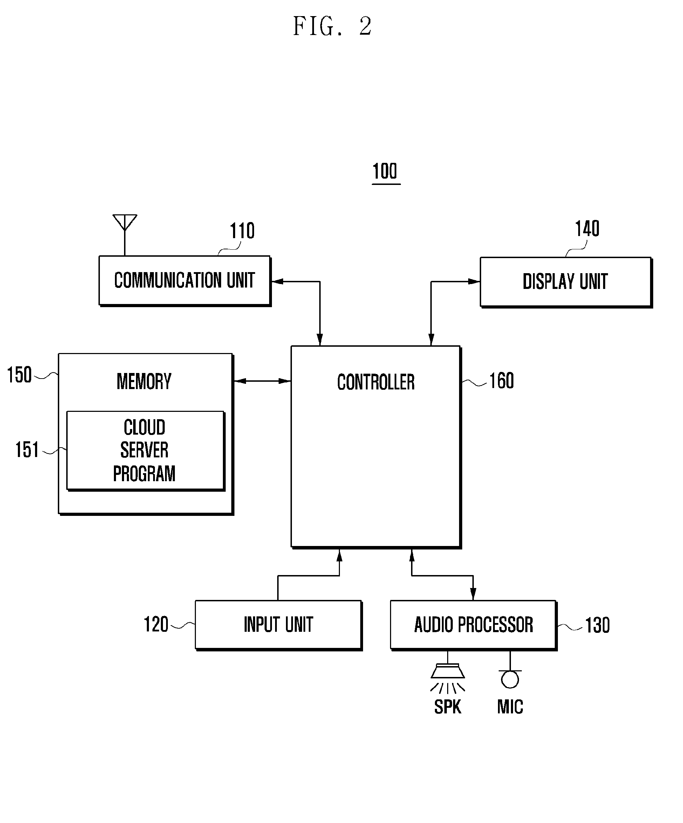

FIG. 2 is a block diagram illustrating a configuration of a terminal 100 of a system 10 for supporting a cloud service.

Referring to FIG. 2, the terminal 100 of the present invention may include a communication unit 110, an input unit 120, an audio processor 130, a display unit 140, a memory 150, and a controller 160.

The terminal 100 having a construction mentioned above establishes a connection with the cloud service device 200 using a communication unit 110, and receives a content viewing menu capable of viewing contents uploaded in the cloud service device 200 on the display unit 140. Here, the terminal 100 may provide a user control input to the cloud service device 200, and may receive a content viewing menu to which a corresponding user control input is applied to output the content viewing menu. Accordingly, the terminal 100 of the present invention may easily see his or her content types uploaded on the cloud service device 200. Further, the terminal user may share information with other terminal users in a convenient environment using the content viewing menu.

In operation, the communication unit 110 forms a communication channel for connection with the cloud service device 200. Accordingly, the communication unit 110 may be configured by a communication module enabling a communication environment connection or an Internet environment connection to which the cloud service device 200 is connected. The communication unit 110 may support transception of authentication data for authentication during a connection process of the cloud service device 200, reception of data with respect to image elements constituting a content viewing menu provided from the cloud service device 200, transmission of data corresponding to the user control input, and reception of outcome data corresponding to the user control input.

The input unit 120 generates various input signals necessary for an operation of the terminal 100. The input unit 120 may be configured by various input means such as a key board, a key pad, and a key button. Further, when the display unit 140 is provided by a touch screen, the input unit 120 may be configured by a form of a virtual touch map output on the touch screen. For example, the input unit 120 may be configured by at least one of various key maps such as a 3*4 key map, a 5*4 key map, a Qwerty key map, and a Dvorak key map.

Particularly, the input unit 120 may generate an input signal for requesting a connection to the cloud service device 200, an input signal corresponding to authentication information input, and an input signal corresponding to a user control input for viewing contents, and may transfer the input signals to the controller 160. The input signal corresponding to the user control input may include at least one of signals for operating a zoom function of a content viewing menu, a moving function of contents, a resizing function of the contents, a z-depth search and arrangement with respect to the contents, a content preference designation function, a menu for controlling, adding, and selecting the contents, a report and search function of new contents, a sandbox operation function for sharing the cloud service, and generation and search functions of memo contents. Generation of the foregoing input signals will be described in details with reference to figures later.

The audio processor 130 may output various audio data set during an operation of the terminal 100, audio data according to playback of an audio file stored in the memory 150, and audio data received from the exterior. Further, the audio processor 130 may support an audio data collecting function. To this end, the audio processor 130 may include a speaker SPK and a microphone MIC. Particularly, the audio processor 130 may output various audio data associated with an operation of the content viewing menu provided from the cloud service device 200. In this case, the audio processor 130 may confirm the contents on a content viewing menu and may output a guide sound or an effect sound according to an input signal selecting detailed view information.

The display unit 140 provides various interfaces necessary to operate the terminal 100. For example, the display unit 140 supports an idle screen and menu screen necessary to operate the terminal 100. The display unit 140 of the present invention may include a touch panel and a display panel which may be used as an input means for generating various touch events. Meanwhile, the display unit 140 may provide various graphic user interfaces associated with the support of a content viewing function according to the embodiment of the present invention.

For example, the display unit 140 may provide graphic user interfaces for supporting a zoom function of a contents viewing menu, for supporting a moving function of contents, for supporting a resizing function of the contents, for supporting z-depth search and arrangement the contents, for supporting a menu function for controlling, adding, and selecting the contents, for supporting a preference designation function of the contents, for supporting report and search function of new contents, for supporting a sandbox operation function for sharing the cloud service, and for supporting generation and search function of memo contents.

The memory 150 may store an operating system necessary to operate the terminal 100, and data or an application program and an algorithm corresponding to various user functions. Particularly, the memory 150 may store a cloud client program 151 in order to support a content viewing function based on a cloud service of the present invention. Further, when downloading contents stored in the cloud service device 200, the memory 150 may store the contents. When performing a contents viewing function based on the cloud service, the memory 150 may temporarily store detailed view information of specific contents. That is, the memory 150 may temporarily or semi-permanently store information about elements configuring the content viewing menu.

The cloud client program 151 may include a routine of supporting connection of the cloud service device 200 and a routine of receiving information about a content viewing menu from the cloud service device 200. Further, the cloud client program 151 may include a routine supporting the contents that are uploaded to the cloud service device 200 or downloaded from the cloud service device 200. Particularly, the cloud client program 151 may include a routine for collecting a user control input in a state that a content viewing menu is output, a routine for providing the collected user control input to the cloud service device 200, a routine for receiving a content viewing menu to which the user control input is applied, and a routine for updating the content viewing menu displayed on the display unit 140.

The controller 160 controls signal processing, transfer, storage, and deletion of data. Particularly, the controller 160 supports a content viewing function based on the cloud service according to the embodiment of the present invention. In detail, when an input signal requesting a connection to the cloud service device 200 is generated from the input unit 120 or the display unit 140 having an input function, the controller 160 may collect address information of the corresponding cloud service device 200 and may the control signal process for connection. In this case, the controller 160 outputs a menu or an icon widget capable of instructing a connection to the cloud service device 200 on the display unit 140.

Meanwhile, if the connection to the cloud service device 200 is normally performed, the controller 160 may output a content viewing menu on the display unit 140 based on data for configuring the content viewing menu provided from the cloud service device 200. When an input signal corresponding to a user control input is generated in order to control the content viewing menu, the controller 160 creates a message for providing a corresponding input signal to the cloud service device 200. The created message may be provided to the cloud service device 200 under control of the controller 160. When receiving data corresponding to the content viewing menu to which a user control input is applied from the cloud service device 200, the controller 160 may control to update the currently output content viewing menu based on corresponding data.

Further, the controller 160 may generate memo contents on the cloud service device 200 according to the user control input. To this end, the controller 160 may provide a layer for generating the memo contents to the display unit 140, and may provide a message including memo contents created on the corresponding layer to the cloud service device 200. The controller 160 may receive and store memo contents on the content viewing menu under of user control.

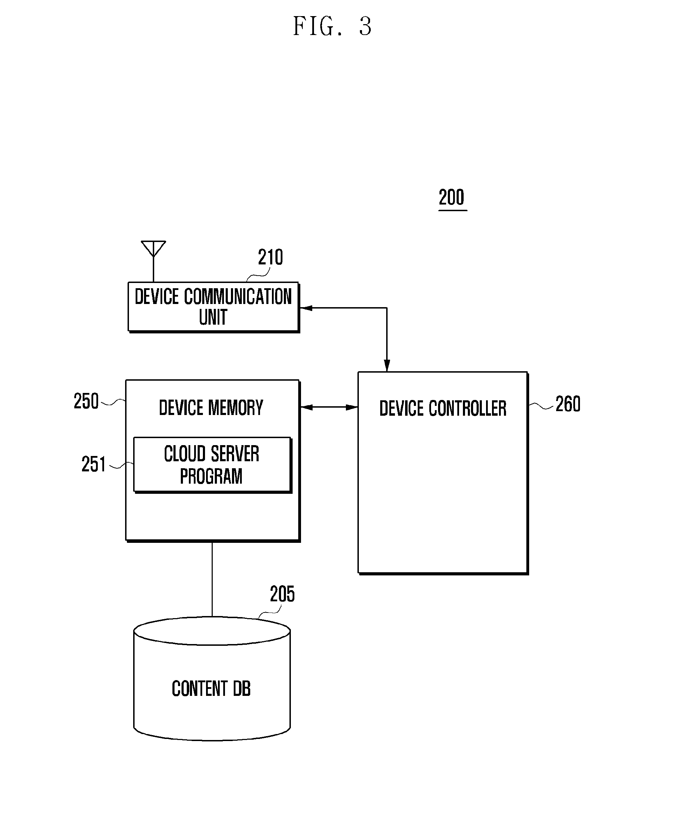

FIG. 3 is a block diagram illustrating a configuration of a cloud service device 200 according to the embodiment of the present invention.

Referring to FIG. 3, the cloud service device 200 of the present invention may include a device communication unit 210, a device memory 250, and a device controller 260. The cloud service device 200 may include a content DB 205 for supporting a cloud service. Alternatively, the content DB 205 may be included in the device memory 250. The content DB 205 may store contents uploaded by users and memo contents created in a cloud service environment. Meanwhile, the content DB 205 may store data associated with real contents, and the device memory 250 may store pointer information relating to the contents stored in the content DB 205. The cloud service device 200 provides a content viewing menu to the terminals 100 based on the construction, which may provide a screen created based on pointer information of contents rather than a screen configured based on the real contents. If the content viewing menu is changed according to the user control input, the cloud service device 200 may retrieve necessary contents information from the content DB 205 according to a characteristic of the changed content viewing menu. As a result, when only identification and classification of respective contents are required from the content viewing menu, the cloud service device 200 may configure the content viewing menu using pointer information and display information of contents. The cloud service device 200 may maximize a load according to the usage of contents by accessing the contents information from the contents DB 205 only in an environment where real contents are required.

The device communication unit 210 forms a communication channel with at least one terminal 100, and supports data transception for realizing a cloud service of each terminal 100. Particularly, upon connection of the terminal 100, the device communication unit 210 may provide content viewing menu data created based on stored contents of the cloud service device 200 for a particular terminal 100. Further, when receiving a user control input from the terminal 100, the device communication unit 210 may transfer the user control input to the device controller 260 and may store a cloud service program 151 under control of the device controller 260.

The cloud server program 151 may include routines for connection of the terminal 100, authentication of the terminal 100, provision of the content viewing menu according to the user control input.

In particular, the cloud server program 151 may include a routine configuring a content viewing menu where a content image or icons having various shapes and colors are arranged on a preset canvas region according to a user's request. Further, the cloud server program 151 may include a routine for changing a content viewing menu according to a user control input signal from the terminal 100. When the cloud service device 200 is activated, the cloud server program 151 is loaded onto the device controller 260 and supports a cloud service, and particularly supports a content viewing function based on the cloud service of the present invention.

The device controller 260 may control processing and transfer of various signals, and update and deletion of data necessary to operate the cloud service device 200. Particularly, when receiving a user control input for controlling a content viewing menu from the terminal 100, the device controller 260 may control change of an image according to the user control input. For example, the controller 260 may receive a control input for executing a zooming function of a content viewing menu, a control input for moving execution of contents, a control input for resizing execution of the contents, a control input for executing z-depth search and arrangement with respect to the contents, a control input for menu selection for controlling, adding, and selecting the contents from the terminal 100. Further, the device controller 260 may receive at least one of a control input for designating a preference of contents, a control input for executing report and search of new contents, a control input for operating a sandbox in order to share the cloud service, and a control input for executing generation and search of memo contents from the terminal 100. When receiving the foregoing control inputs, the device controller 260 may control changes on the content viewing menu according to a received control input, and may provide information about the changed content viewing menu to the terminal 100.

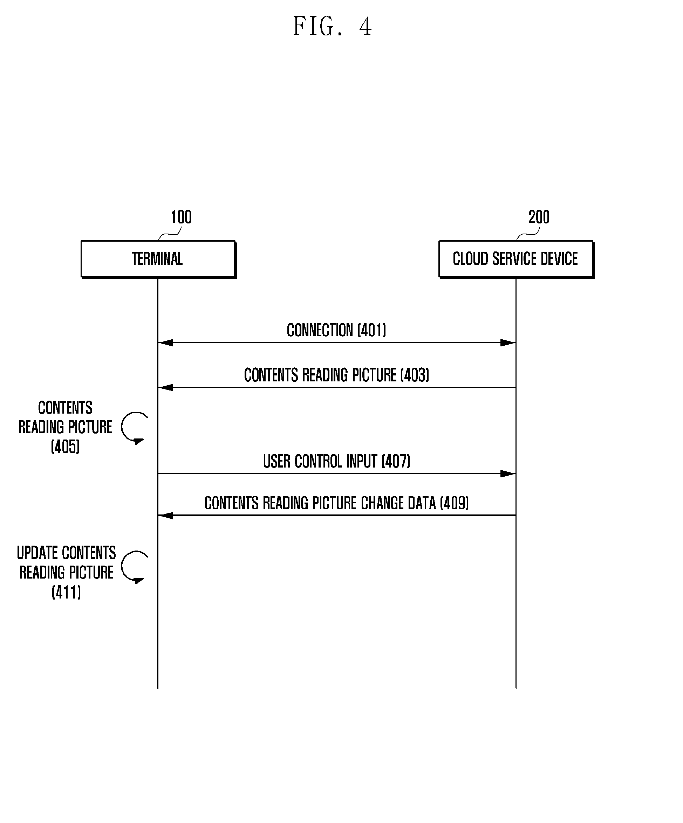

FIG. 4 is a diagram illustrating a method of supporting a cloud service according to an exemplary embodiment of the present invention.

Referring to FIG. 4, in the method of supporting the cloud service according to the present invention, a terminal 100 connects with a cloud service device 200 (401). During this connection, the terminal 100 may transmit a message requesting connection based on address information of the cloud service device 200, and in response, the cloud service device 200 may request authentication information for authenticating the terminal 100. Then, the terminal 100 provides previously registered authentication information, and the cloud service device 200 confirms the corresponding authentication information. When the received authentication information corresponds to the previously registered authentication information, the cloud service device 200 may allow the connection with the terminal 100.

Next, the cloud service device 200 may provide a content viewing menu to the corresponding terminal 100 (403). The content viewing menu provided from the cloud service device 200 may be an updated content viewing menu by a terminal 100 of at least one user using the cloud service device 200.

In detail, the content viewing menu provided from the cloud service device 200 may be configured by a form where at least one different content icon or image having at least one of different shapes or colors is arranged on a predetermined region. That is, the displayed contents have a predetermined surface and mutual unique attributes for displaying specific contents. For example, the content viewing menu has shapes or colors distinguished by photograph contents, text contents, and audio contents, and may be output on a predetermined region. The content viewing menu may have shapes or colors classified by terminals or users uploading the contents, and it may be output on a predetermined region. The content viewing menu may be displayed to have different shaped and colors or the same shape and color according to various attributes of contents such as a data size, a upload time, the download number of times, the search number of times, and an attribute having a comment of a specific user. The content viewing menu may include a memo content input on the content viewing menu.

When receiving data corresponding to the content viewing menu from the cloud service device 200, the terminal 100 outputs a content viewing menu to the display unit 140 based on corresponding data (405). If a user control input for controlling the content viewing menu is generated from the input unit 120 or a display unit 140 having an input function, the terminal 100 may transfer a corresponding control input to the cloud service device 200 (407).

When receiving a message including a user control input from the terminal 100, the cloud service device 200 extracts a user control input from the corresponding message. The cloud service device 200 control change of a content viewing menu corresponding to the extracted user control input, and provides data corresponding to the change of the content viewing menu to the terminal 100 (409). When receiving data with respect to the change in the content viewing menu from the cloud service device 200, the terminal 100 may update the content viewing menu retained by the user and may output the updated content viewing menu (411).

As described above, in the method of supporting a cloud service according to the present invention, a terminal 100 connects with the cloud service device 200, receives a content viewing menu capable of easily classifying and recognizing the displayed contents. Accordingly, the user may easily perform search and replaying the contents, movement, deletion, or correction of the contents, and generation of new contents associated with the cloud service.

The foregoing embodiment has illustrated a system 10 for supporting a cloud service, respective devices constituting the system, and the method of supporting a cloud service according to the embodiment of the present invention. Hereinafter, the content viewing menu provided from the cloud service device 200 of the present invention and a manipulation of the content viewing menu will be described in detail

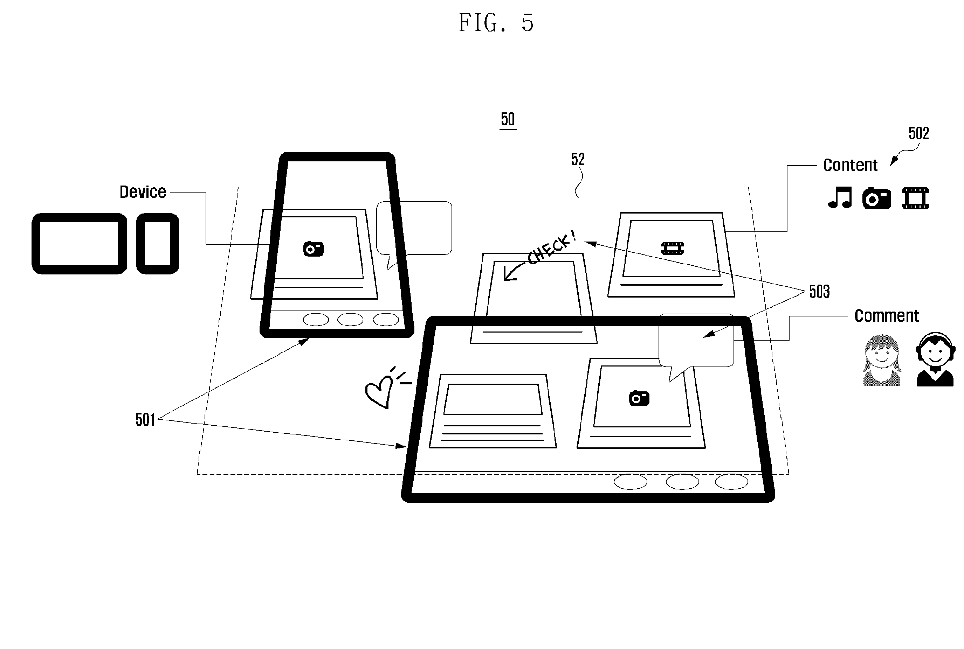

FIG. 5 is a conceptual diagram illustrating a content viewing menu provided from the cloud service device according to an exemplary embodiment of the present invention.

Referring to FIG. 5, the content viewing menu 50 of the present invention may be configured in a state that various contents are arranged on a canvas region 52. The canvas region 52 of the content viewing menu 50 may have a region larger than that of allowable display size of terminals 100 connected to the cloud service device 200 as shown. Accordingly, only a portion of the canvas region 52 may be displayed according to the size of the terminal 100 as illustrated in a region 501. A portion of the canvas region 52 displayed on each terminal 100 may be a predetermine location of the canvas region 52 previously defined by the cloud service device 200. A portion of the canvas region 52 displayed on each terminal 100 may be a predetermined region of the canvas region 52 used just prior to the last connection by each terminal 100 to the cloud service device 200. A part of the canvas region 52 is output on the terminal 100 having two display regions of different sizes is shown in FIG. 5 for illustrative purposes, however, the terminal 100 on which the whole canvas region 52 is displayed may be provided.

Contents may have different forms and shapes so that the user may intuitively recognize which the content types are provided on the content viewing menu 50. Further, the contents provided on the content viewing menu may include an image effect indicating a music file, a photograph file, and a moving image file as illustrated in a region 502 in order to easily identify the contents.

In addition, a comment created by users operating terminals connecting with the cloud service device 200 may be provided on the content viewing menu 50 as memo contents 503. The memo contents 503 may be provided in the form of a word balloon(or speech bubble) as illustrated in a region 503 or may be a free statement type text or image.

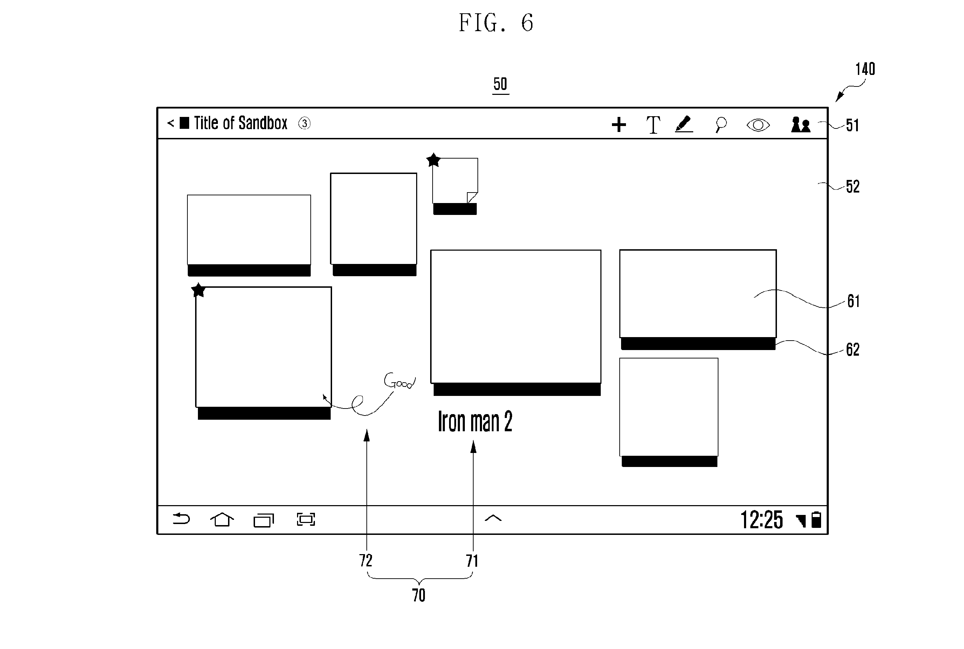

FIG. 6 is a schematic diagram illustrating a canvas view image among an example of the content viewing menu 50 according to an exemplary embodiment of the present invention.

Referring to FIG. 6, the content viewing menu 50 in the form of a canvas view according to the present invention may include a canvas region 52 and a menu region 51. The canvas region 52 may display various contents having different forms and colors at a predetermined region. Contents output on the canvas region 52 may include a content display region 61 and a content information region 62. The content display region 61 is a region on which image or text information is allocated for display. The content display region 61 may be variously configured according to characteristics of the contents. The image effect for identifying a type of contents mentioned above may be displayed on the content display region 61. The content information region 62 is a region onto which various information about the contents are provided. Here, an amount and the size of displayed information may be changed according to the size of displayed contents. For example, when the contents are displayed to have a predetermined size or smaller, the contents information region 62 may be displayed in a specific line form. When the contents in the content information region 62 are displayed to have the predetermined size or larger, at least some of title information of the contents, text information about a type of the contents, and description information of the contents may be displayed according to the size.

Further, when a user designates specific contents as preference content, an image effect for indicating the contents may be provided to the content viewing menu 50. A specific image effect, for example, a star mark (asterisk) is provided to one side of contents designated as the preference contents. Designation of the preference contents may be removed by a user, a manager of the cloud service device 200, or an operator. The star mark may be substituted by other image effect, for example, flowers or firecrackers. Thus, the star mark may be substituted by any other predetermined mark or sign.

Further, memo contents 70 may be displayed on the content viewing menu 50. The memo contents 70 may include first memo contents 71 input by a text input device and second memo contents 72 freely stated by a finger of the user or a stylus pen. The user may perform an operation creating a memo on the content viewing menu 50 using a pen as illustrated above in order to input the second memo contents 72. Then, the terminal 100 transfers a message including an input signal corresponding to the operation to the cloud service device 200. The cloud service device 200 may extract a memo from a message including a corresponding input signal, and may store and manage the memo as the second memo contents. In this case, the cloud service device 200 may store and manage actual information about the second memo contents 72 in the content DB 201.

A menu region 51 may include a region on which title information of a sandbox input by the user, which is registered in the cloud service device 200, an area indicating report information, and a menu selection region. The menu selection region may include new contents upload, text input, search execution, and user information items. Thus, the user may variously control the cloud service device 200 through control of the menu region 51.

Meanwhile, when new contents are uploaded on a content viewing menu 50 provided in the form of a canvas view, newly uploaded contents may be arranged at a center of the content viewing menu 50. In this case, corresponding contents display during a procedure of displaying newly uploaded contents may include an image effect for indicating that the contents are new to be distinguished from other contents.

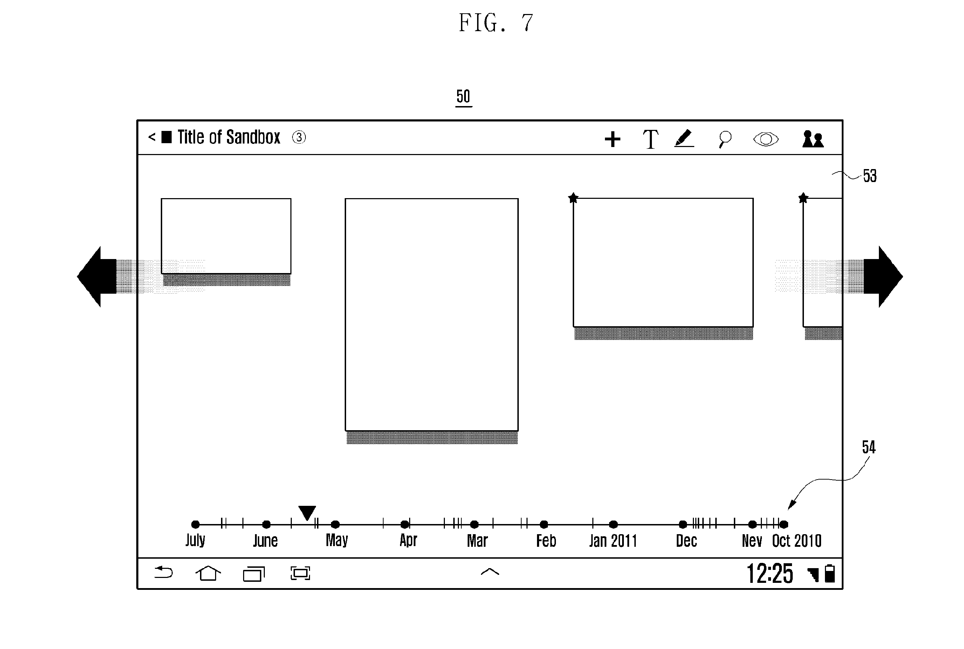

FIG. 7 illustrates a timeline view type interface among content viewing menus 50 provided from the cloud service device 200 according to the present invention.

Referring to FIG. 7, a terminal 100 connects with the cloud service device 200 to receive data corresponding to a content viewing menu according to support of the cloud service device 200, and may output the content viewing menu 50 on the display unit 140 based on the received data. In this case, the cloud service device 200 may provide a timeline view type content viewing menu according to a request of the terminal 100 or may be displayed by a default mode.

The timeline type content viewing menu may include a contents alignment region 53 and a timeline region 54. The contents alignment region 53 is a region in which various contents are aligned. The timeline region 54 is a region in which predetermined time information are sequentially listed in order to indicate time information. The current point information, pointed by an arrow, indicating where is an image displayed on a current content alignment region 53 may be displayed along the timeline region 54. Further, the timeline region 54 may represent the number of contents included in each unit by predetermined units. For example, a form of three bars arranged between July and June in the timeline region 54 may represent that three contents are uploaded between July and June. Accordingly, a horizontal bar displayed on the timeline region 54 represents a time, and a vertical bar may represent a time point where the contents are uploaded at a specific time period. Meanwhile, an initial point of the timeline region 54 may indicate the time when an initial sandbox was generated after the user registers in the cloud service device 200.

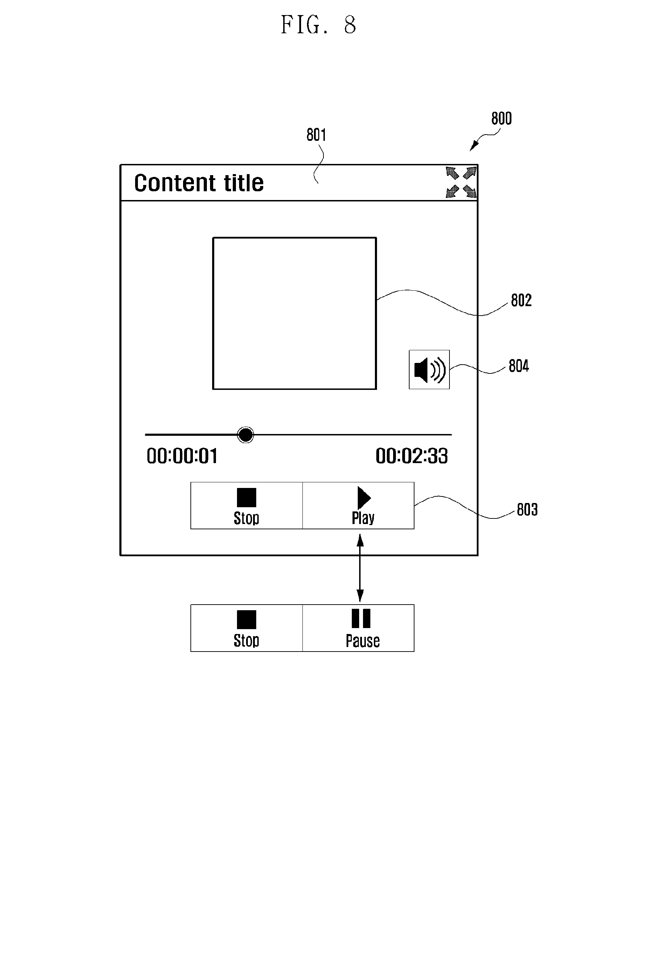

FIGS. 8 to 15 are diagrams illustrating display patterns of contents displayed on a content viewing menu provided from the cloud service device 200 according to an exemplary embodiment of the present invention. Hereinafter, a contents display form of FIGS. 8 to 15 may be displayed in a thumbnail form having a predetermined size on the content viewing menu according to the teachings of the present invention.

First, referring to FIG. 8, when specific contents are audio contents, the content viewing menu 50 displayed on the terminal 100 may display contents in the form of an audio contents player. In this case, the audio contents 800 may be displayed in the form of a thumbnail. That is, as shown, the audio contents 800 may be displayed in a thumbnail form where a contents title 801, an icon image 802 of the audio contents, and an on-screen player 803. Upon playback of the audio contents 800, a speaker image 804 supporting a function such as volume control may be displayed. The on-screen player 803 may convert playback and pause into a toggle form. As illustrated above, the cloud service device 200 may provide specific audio contents 800 to the content viewing menu 50 in the thumbnail form. When a user control inputs for controlling a playback of the audio contents 800 is generated, the contents image displayed in the thumbnail form is supported so that corresponding audio contents may be played immediately. Accordingly, the user may directly control the playback of corresponding contents by controlling an on-screen player 803 of the audio contents 800 displayed in a thumbnail form. During this procedure, the terminal 100 may provide a control input for controlling corresponding audio contents 800 to the cloud service device 200, and the cloud service device 200 may provide the played audio contents to the terminal 100 in a streaming scheme.

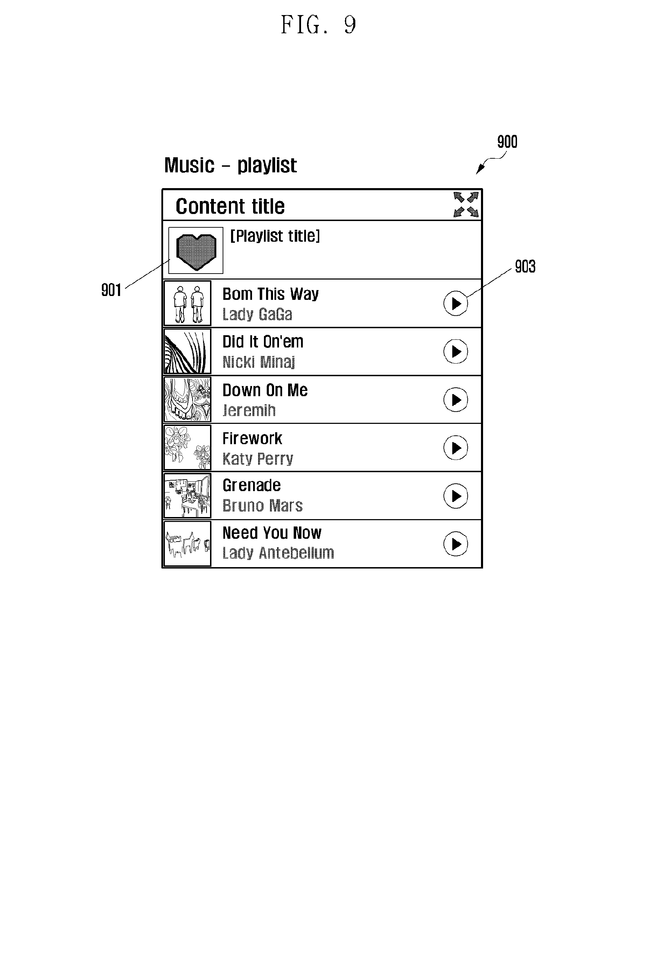

FIG. 9 illustrates playback list contents 900 which may be provided in a thumbnail form as in the foregoing audio contents 800. Here, the size of the playback list contents 900 may be adjusted according to user control. The playback list contents 900 may include a list icon image region 901 and a hyperlink region 903. The list icon image region 901 may be updated or changed by a user having a corresponding icon image control authority among users connecting with the cloud service device 200. The playback list contents 900 include a music title and an album jacket image included in a playback list, and may include a music playback button. That is, if the user selects the hyperlink 903, the corresponding contents linked to the hyperlink 903 may be played, and the played contents may be provided to the terminal 100. In this case, when the hyperlink 903 is selected, a thumbnail image of the audio contents 800 illustrated in FIG. 8 may be displayed.

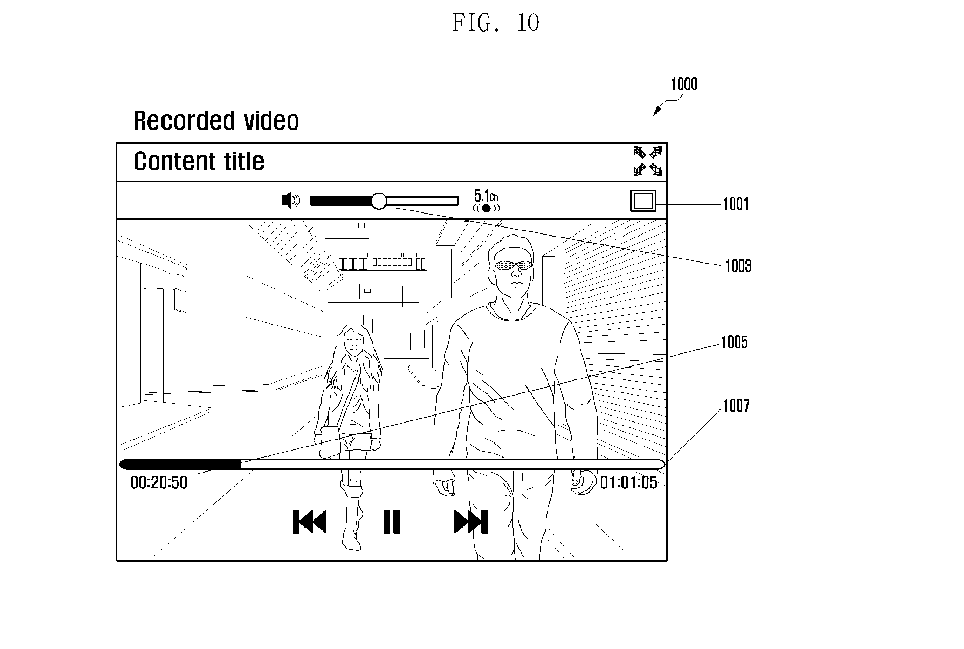

FIG. 10 illustrates video contents 1000. Here, the content viewing menu 50 may provide a player including buttons for playing video in a widget form or a thumbnail form. The size of the video contents 1000 provided in the illustrated thumbnail form may be adjusted according to a design scheme of the cloud service device 200. The video contents 1000 may include a ration button 1001 for adjusting a screen ratio, a volume control button 1003 for controlling a volume, a playback time information region 1005 representing a playback time, and an operation time information region 1007 representing duration of the video file.

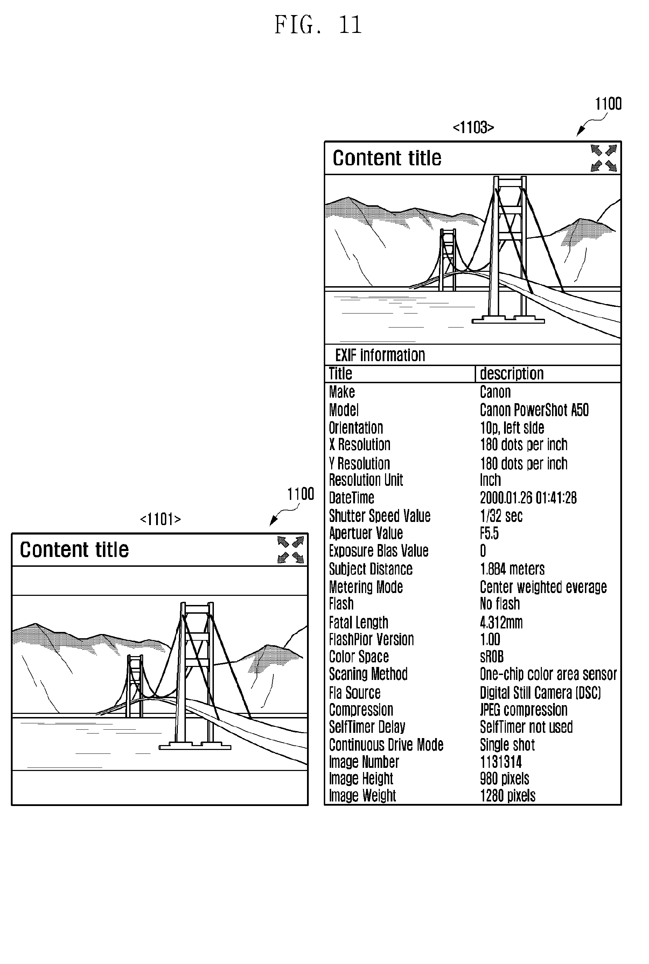

FIG. 11 illustrates photograph contents 1100. A screen 1101 illustrates a state where only a display region of photograph contents is provided, and a screen 1103 illustrates a state where an information region of the photograph contents is displayed together with the display region of the photograph contents. As shown, a display form of the photograph contents 1100 may be changed according to a design scheme of the cloud service device 200. When the user generates an input signal for information region view of specific photograph contents 1100 while confirming a content viewing menu 500, the cloud service device 200 may change the display form of the photograph contents 1100. When the user increases an enlargement ratio of the content viewing menu 50, the photograph contents 1100 may be adjusted to a state 1103 including information region. When an enlargement ratio of the content viewing menu 50 is reduced less than a predetermined ratio, the photograph contents 1100 may be controlled to a state 1101. When a control input instructing an information region of photograph contents 1100 is generated from the terminal 100, the cloud service device 200 may change the photograph contents 1100 from a state 1101 1 to a state 1103, and may provide corresponding data to the terminal 100. That is, when the content viewing menu is enlarged larger than a predetermined size or a size ratio of specific contents displayed on the content viewing menu is greater than a predetermined ratio of a picture, the terminal 100 and the cloud service device 200 may convert the content viewing menu into a detailed view.

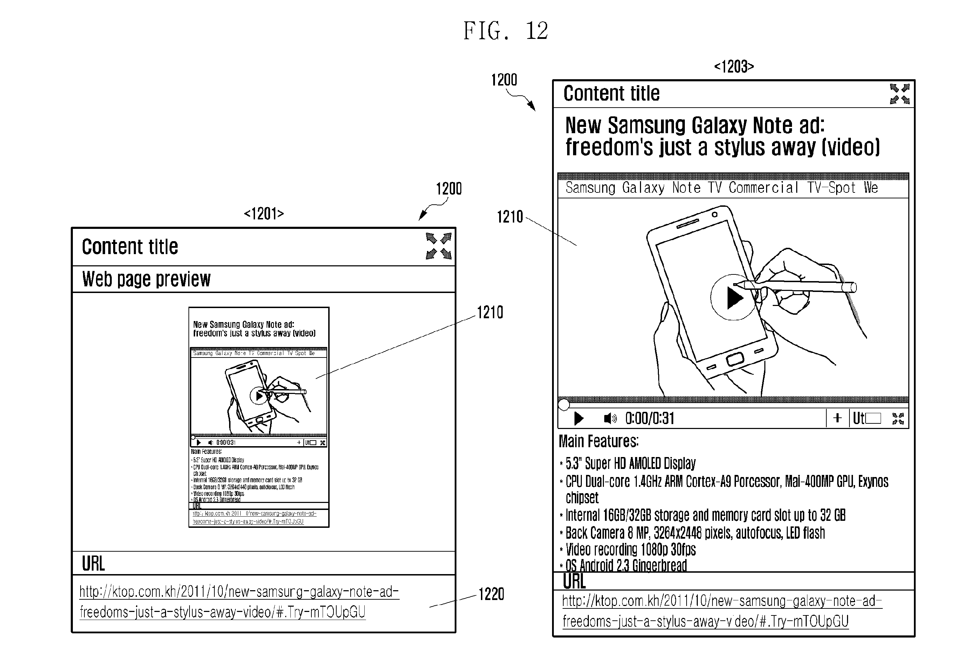

FIG. 12 illustrates web contents 1200 which may include a web page preview screen 1210 and a web page information region 1220 including address information of the web page preview screen 1210 as illustrated in a screen 1201. As illustrated above, when the content viewing menu is enlarged or an enlargement view control input is provided from the terminal 100, the web contents 1200 may be controlled by the cloud service device 200 as illustrated in a screen 1203. That is, only when a web page preview may be provided in real time, a web page preview screen 1210 of the web contents 1200 may be displayed. To this end, the terminal 100 or the cloud service device 200 may collect and provide information corresponding to the web page preview screen 1210 based on address information stated in the web page information region 1220. The enlargement view control input may be an input indicating conversion to a form provided from real web contents 1200.

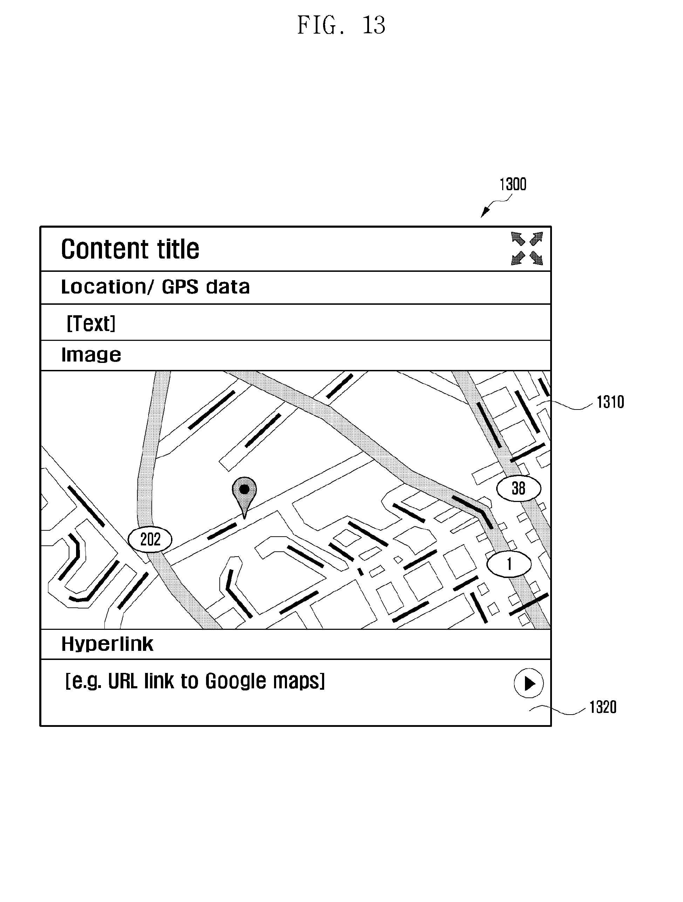

FIG. 13 illustrates location contents 1300. The cloud service device 200 may provide the location contents 1300 created based on map information through a content viewing menu. As described above, the location contents 1300 may be provided in a thumbnail form having a predetermined size. Accordingly, the cloud service device 200 may control an accumulation ratio of a map output on a location display region 1310 of corresponding location contents 1300 according to a previously defined size of a thumbnail and a size of a thumbnail according to a control input provided from the terminal 100. Meanwhile, service server address information providing corresponding map information may be displayed on a location information region 1320 of the location contents 1300. Predetermined graphic user interface elements displayed on the location contents 1300 may include hyperlink information according to a characteristic of corresponding location contents. That is, specific information among information displayed on the location contents 1300 may be provided in the form supporting conversion to another page including corresponding address information according to selection of the user. In order to provide the location contents, the terminal 100 may use a location information collecting sensor, for example, a GPS module or a Wi-Fi module, and collected information is provided to the cloud service device 200 so that the collected information may be displayed on contents 1300.

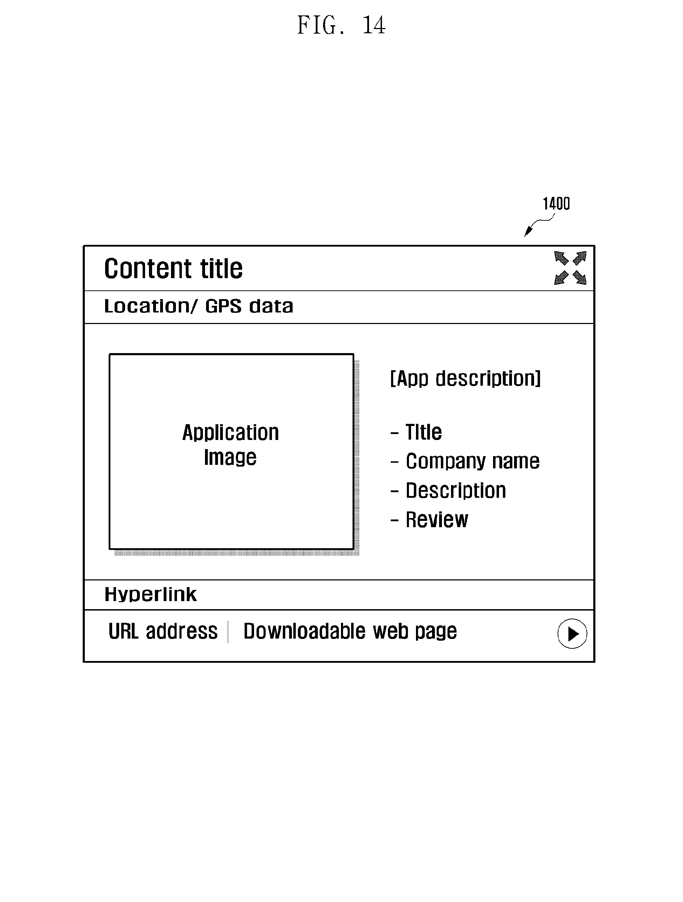

FIG. 14 is a diagram illustrating application contents 1400. The application contents 1400 provided to the content viewing menu may include at least one of an application image, a description, and a shortcut item. Further, the application contents 1400 may be expressed in the form of various icons or images, or an avatar according to a characteristic of a corresponding application. The user selects corresponding application contents 1400 and performs a control input for execution or download, and the cloud service device 200 may support installation, execution, and download of corresponding application contents 1400 in cooperation with the terminal 100.

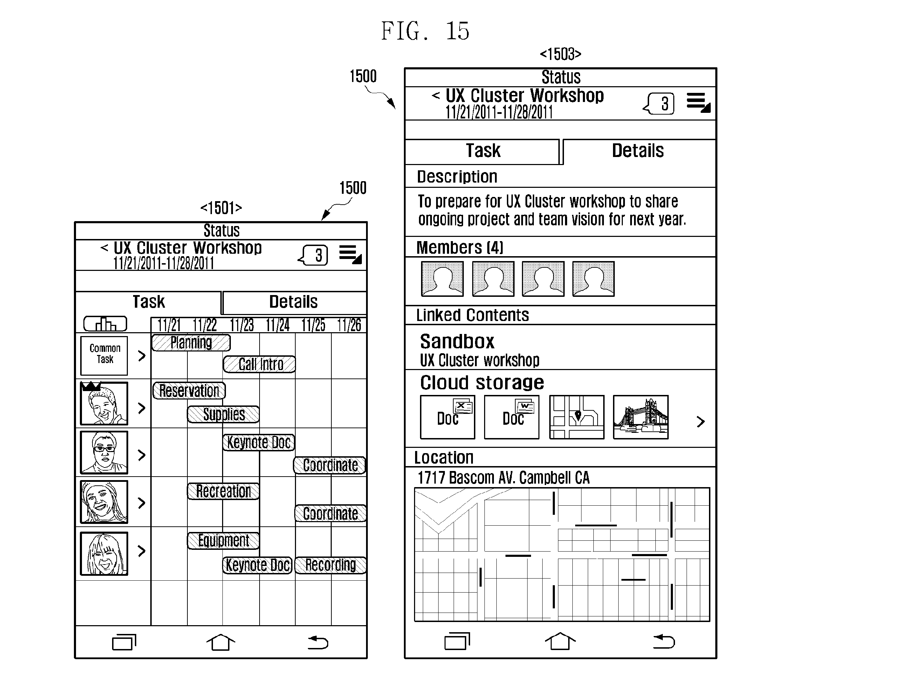

FIG. 15 illustrates planner contents 1500. The planner contents 1500 may express schedule information of respective users sharing the cloud service. The size of a thumbnail in the planner contents 1500 may be automatically change according to the number of a plurality of users. In addition, when the planner contents 1500 are provided to a specific user terminal, the planner contents 150 may be changed to a requested size according to a control input of a corresponding user. The planner contents 1500 may express information about locations with respect to schedules of users sharing a specific sharing region, a sandbox region provided from the cloud service device 200, members, and relation contents. That is, the planner contents 1500 may be provided in a form of a general view schematically showing the schedule information of users as illustrated in a screen 1501. Further, when there is a user request, there is a control input for controlling the size of a content viewing menu 50, or there is a specific event, for example, a schedule among specific events included in the planner contents 1500 at a current time or within a preset time near the current time, the planner contents 1500 may provide a screen 1503 on a content viewing menu. The planner contents 1500 may output information about a description, members, linked contents, and locations according to an environment where a "details" tap is selected from a "task" tap and the "details" tap in a screen 1501.

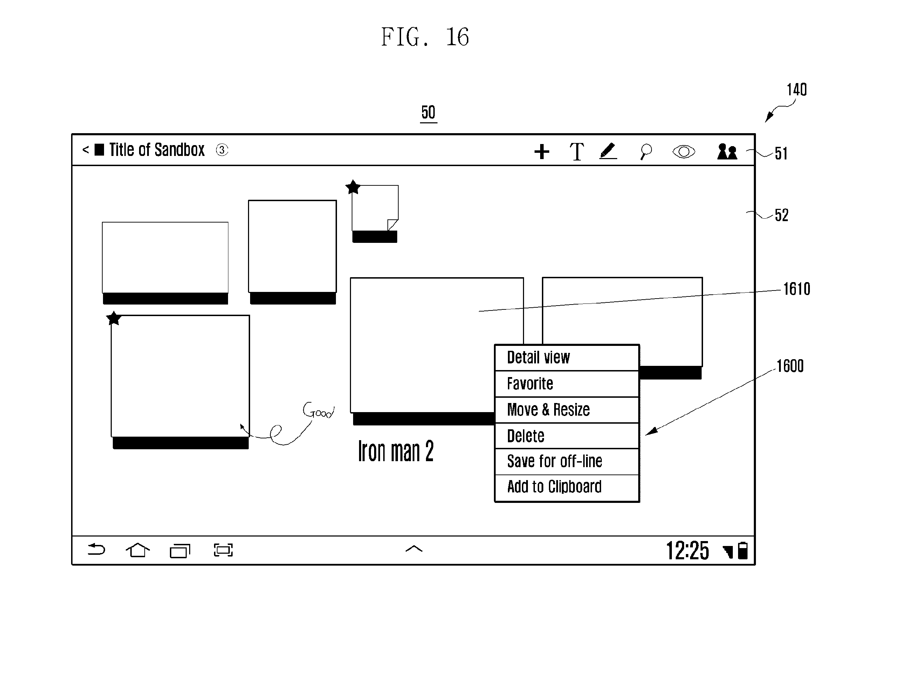

FIG. 16 is a diagram illustrating a state of a control menu output on the content viewing menu 50 according to an exemplary embodiment of the present invention.

Referring to FIG. 16, the user performs connection of the cloud service device 200, and receives a content viewing menu 50 from the cloud service device 200 and controls the terminal 100 to output the received content viewing menu 50 on a display unit 140. Accordingly, the terminal 100 outputs a content viewing menu 50 including a canvas region 52 and a menu region 51 on the display unit 140. In this case, the user may perform a preset input operation in order to request a content control menu 1600. For example, the user may perform an operation of selecting a specific menu item or generating a preset touch event. During this procedure, the user may perform an operation for calling the content control menu 1600 in a state of designating specific contents 1610.

Thereafter, the terminal 100 may generate a control input according to the foregoing operation, and transfer the control input to the cloud service device 200. The cloud service device 200 may provide data corresponding to the content control menu 1600 to the terminal 100 according to reception of the control input. The cloud service device 200 may provide content viewing menu data including the content control menu 1600 information to the terminal 100, and the terminal 100 may output a content control menu 1600 on specific contents 1610 of the canvas region 52 according to a user control input. The content control menu 1600 may include various menu items. For example, the content control menu 1600 may include Detail view, Favorite, Move & Resize, Delete, Save for off-line, and Add to Clipboard items as shown. The detail view item is an item for showing detailed information of designated specific contents 1610, which is a function supporting such that screen change is performed or information included in an information region associated with specific contents 1610 is displayed on a separate display region. The favorite item is an item indicating a preference of the designated specific contents. The move & resize item is an item that moves the designated specific contents 1610 to a specific location of the canvas region 52 or controls the size of the designated specific contents 1610. The delete item is an item for deletion, the Save for off-line item is an item for supporting download, and the Add to Clipboard item is an item that adds the designated specific contents 1610 to a clip board.

Meanwhile, the items included in the content control menu 1600 may be changed according to characteristics of contents. For example, in a case of contents uploaded by the terminal 100, a favorite item may be excluded from a corresponding content control menu 1600 or may be inactivated. A delete item included in a content control menu 1600 may be activated or inactivated according to grades of users or terminals registered in the cloud service device 200. For example, a delete item of deleting specific contents may be provided to a user or a terminal having a grade corresponding to a manager or an operator in an active state. A delete item for deleting specific contents may be omitted or inactivated, and may selectively activate to delete contents uploaded by a user or a terminal of a general grade in the user or the terminal. In the same manner, in a case where movement or size controls of specific contents are limited, the corresponding items in the contents control menu 1600 may be inactivated. The movement and size control function may be achieved by a manager or an operator, and a first contents upload terminal user may be optionally controlled.

Operations of respective items in the foregoing contents control menu 1600 will be described with reference to following drawings.

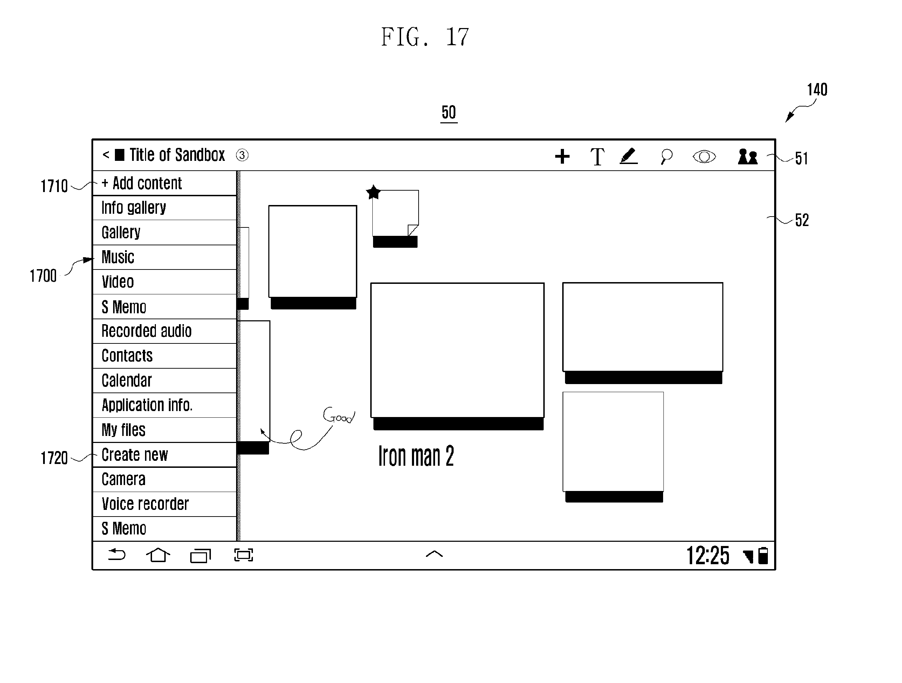

FIG. 17 is a diagram illustrating an environment providing a contents selection menu on the content viewing menu according to an exemplary embodiment of the present invention.

Referring to FIG. 17, a contents selection menu 1700 may be arranged at one side of the content viewing menu 50, for example, a left side of a screen. The contents selection menu 1700 of the present invention is not limited to a drawing in which an added region is shown. That is, the contents selection menu 1700 may be output to a right side or the right side and a left side of the content viewing menu 50 according to intention of a designer or setting by the user.

As shown, the contents selection menu 1700 may include a contents addition item list 1710 and a contents generation item list 1720 as shown. The contents addition item list 1710 may include Info gallery, Gallery, Music, Video, S Memo, Recorded audio, Contacts, Calendar, Application info., and My files items. The info gallery item may be an item supporting information addition of gallery contents associated with a photograph, the gallery item may be an item supporting addition of an image such as a photograph, the music item may be an item supporting the addition of an audio file such as music, and the video item may be an item supporting the addition of a video file such as a moving image. The S memo item is an item adding contents through a stylus pen or a pen specified to a specific terminal 100, and may support the addition of memo contents. The recorded audio item may be an item supporting the addition of recording information or recording information during a call, the contacts item may be an item supporting the addition of connection information with another terminal together with phone-book information, the calendar item may be an item supporting the addition of schedule information associated with a calendar, and the application info. The application Info item may be an item supporting the addition of application relation information. The My files item may be an item supporting the addition of an optional specific file retained by the specific terminal 100 to the cloud service device 200.

The contents generator item list 1720 includes Camera, Voice recorder, and S Memo items, and may be an item supporting instant photograph shooting or moving image shooting in an active state of the content viewing menu 50, and generation of contents in a hand-writing scheme.

If one is selected from items included in the foregoing list, the terminal 100 may support a real time content sharing function in cooperation with a cloud service device 200 associated with supporting of a corresponding function.

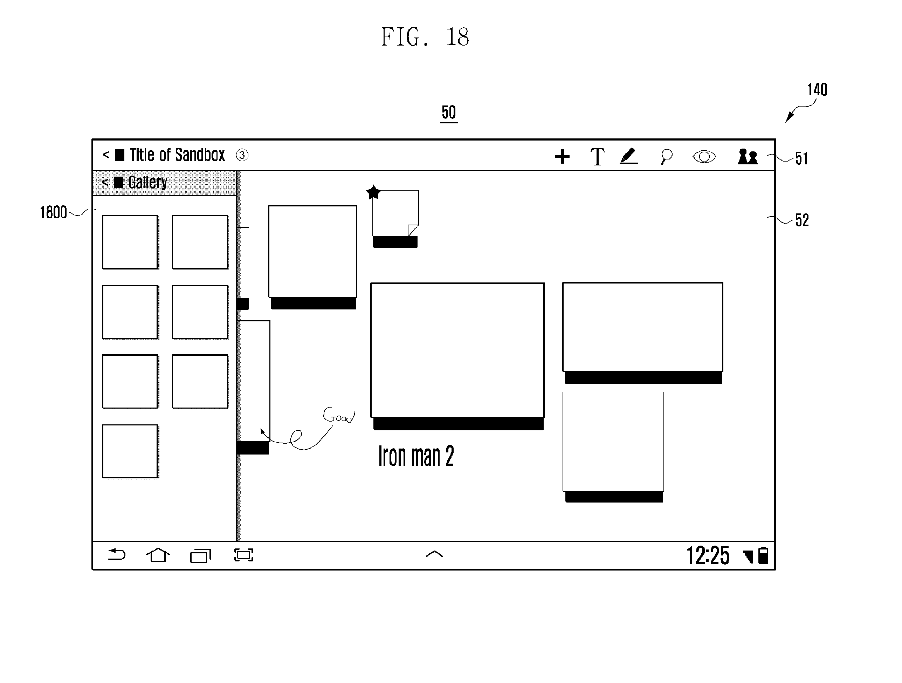

FIG. 18 is a diagram illustrating support of an additional contents selection menu 1800 on the content viewing menu 50 according to an exemplary embodiment of the present invention.

When a type of specific contents is selected from the contents selection menu 1700 illustrated in FIG. 17, a contents list stored in a terminal 100 corresponding to the selected type of contents may be displayed as illustrated in FIG. 18. For example, when the user selects a gallery item from the content selection menu 1700 illustrated in FIG. 17, the terminal 100 may output gallery contents among contents stored in a memory on the content viewing menu 50 as an additional content selection menu 1800. In this case, a viewed additional content selection menu 1800 may include contents of the thumbnail form. The user may easily select specific contents to be uploaded to the cloud service device 200 and may move the selected specific contents on the content viewing menu 50 or may share contents by simply performing a procedure for registering the selected specific contents to the cloud service device 200 supporting the content viewing menu 50.

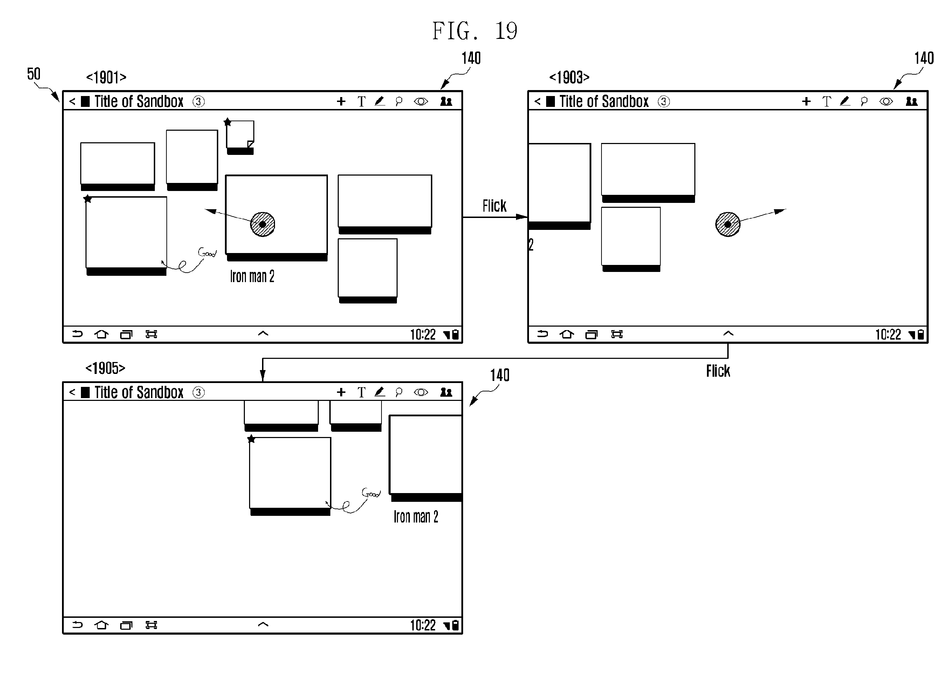

FIG. 19 is a diagram illustrating an operation interface for viewing a canvas view type of contents according to an exemplary embodiment of the present invention.

Referring to FIG. 19, a canvas view type of content viewing menu 50 may be output to the display unit 140 of the terminal 100 as illustrated in a screen 1901. In this case, the user may generate a touch event for selecting a predetermined point of the content viewing menu 50, for example, a touch event for selecting a central point of the screen. Then, the content viewing menu 50 may be selected by the touch event, and the screen image may be moved according to movement of the touch down event. For example, if a flick event is generated in an upper left direction, the content viewing menu 50 may be displayed in a state that the image is moved to the upper left direction by a predetermined distance as illustrated in a screen 1903. If the user designates one side of the content viewing menu 50 in the screen 1903 in the same manner, and generates a flick event in a predetermined direction, for example, in the upper right direction in the designated state, the content viewing menu 50 may be converted into an image state moved to a upper right side as illustrated in a screen 1905.

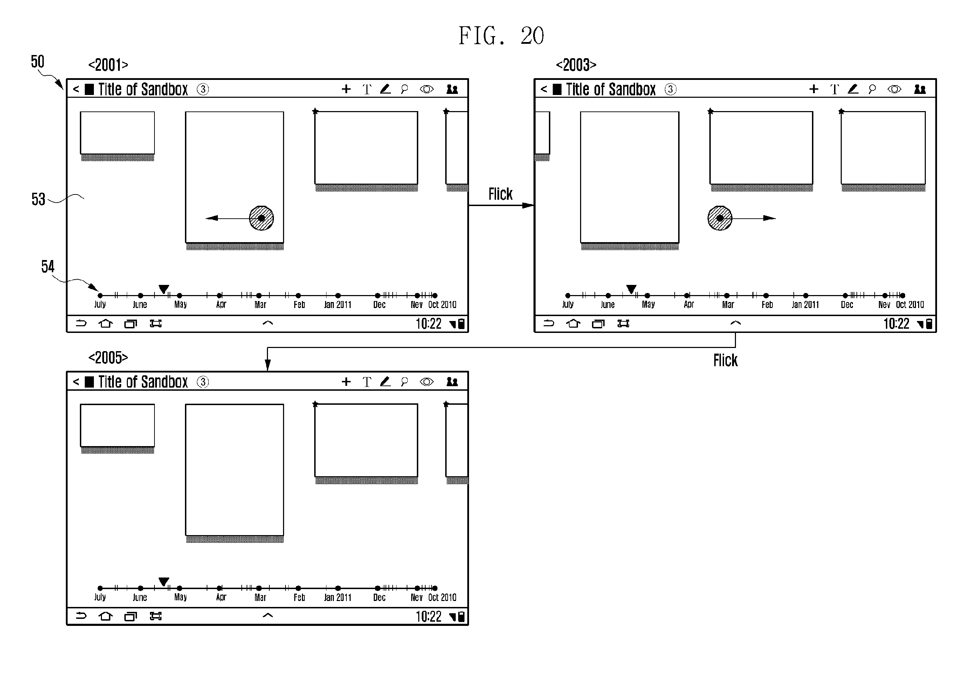

FIG. 20 is a diagram illustrating an operation interface for viewing a timeline view type contents according to an exemplary embodiment of the present invention.

Referring to FIG. 20, contents stored in the cloud service device 200 are arranged in a line to configure a contents arrangement region 53 as illustrated in a screen 2001. The timeline region 54 may be output to the one end of the screen. In this state, a predetermined touch event may be generated on the contents arrangement region 53 and then generate a flick event in a predetermined direction, for example, a left direction. Then, a timeline view type content viewing menu 50 may be displayed in such a way that the screen image is moved to a left side as illustrated in a screen 2003. In the same manner, when the user generates a flick event in a right direction at a state of a screen 2003, a display unit 140 of the terminal 100 may display change of the timeline view type content viewing menu as illustrated in a screen 2005.

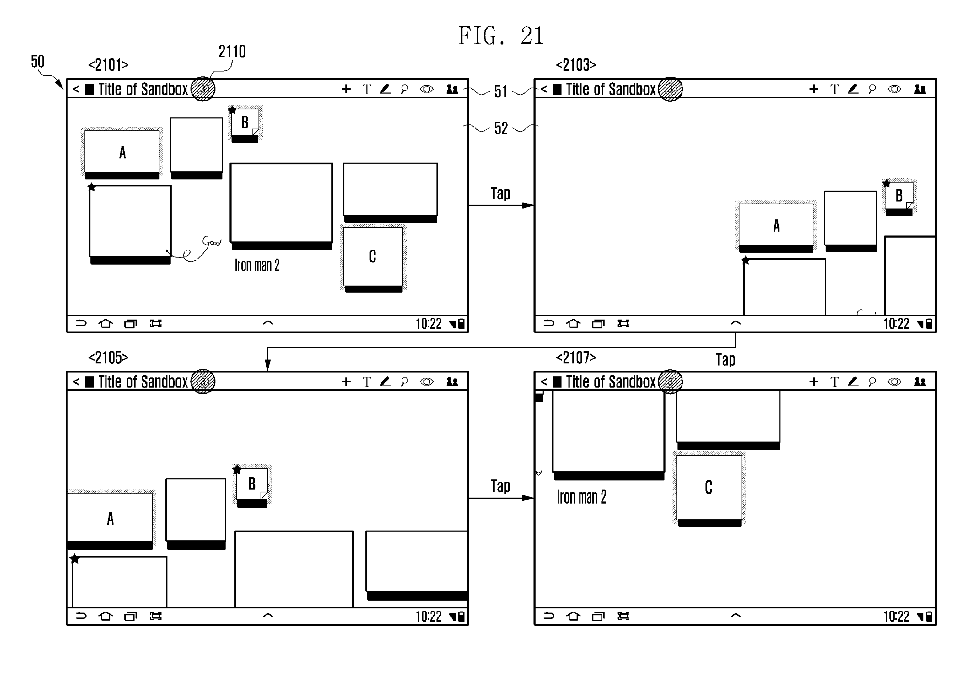

FIG. 21 is a diagram illustrating display of newly added contents according to an exemplary embodiment of the present invention.

Referring to FIG. 21, a terminal 100 may display a content viewing menu 50 as illustrated in a screen 2101. The content viewing menu 500 on a screen 2101 corresponds to a canvas view type of content viewing menu 50 illustrated in previous drawings. A user may select a new addition item 2110 indicating a new addition contents search item among items provided from the menu region on a screen 2101. The new addition item 2110 may include the number of newly added items and location information to the cloud service device 200. The new addition item 2110 is provided for each terminal 100 connected to the cloud service device 200, and provided information may be changed for each terminal 100 by confirming new contents.

Meanwhile, when the user selects a new addition item 2110 in a state of a screen image 2101, the terminal 100 may control the screen image so that the new added items is arranged at the center of the screen as illustrated in a screen 2103. In the same manner, if an input signal for continuously selecting the new addition item 2110, the terminal 100 may control the screen image so that subsequent newly added items are arranged at the center of the screen as illustrated in screen 2105 and 2107. For example, it is assumed that contents A, B, and C are sequentially registered new contents in the foregoing contents. Accordingly, if an event tapping the new addition item 2110 is generated, the terminal 100 may arrange new uploaded contents at the center of the screen in an order where contents are added to the cloud service device 200. Accordingly, the user may rapidly and conveniently search only newly added content on the content viewing menu 50 in sequence.

Meanwhile, when a procedure of confirming newly added contents is generated, a new addition item 2110 output on the foregoing menu region 51 may be removed from the menu region 51. Although contents are confirmed, the new addition item 2110 is not removed but maintains for a designated predetermined time, for example, one hour so that newly added contents may be easily searched. Further, newly added contents A, B, and C may be displayed to have a predetermined color or shape or represent an image effect to be distinguished from contents previously registered in the cloud service device 200.

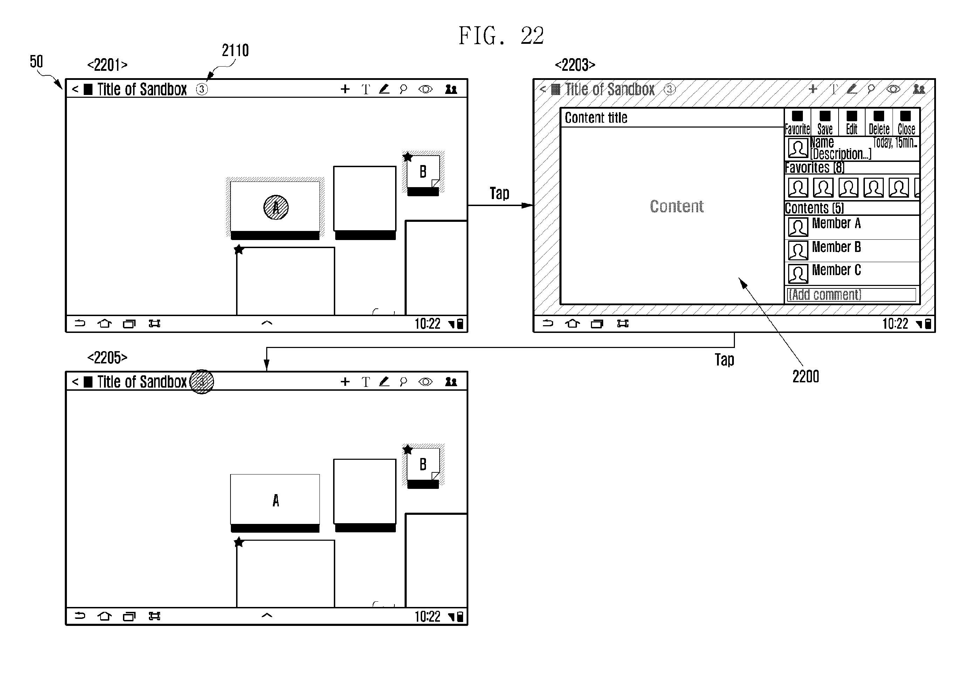

FIG. 22 is a diagram illustrating an interface associated with search of new contents according to an exemplary embodiment of the present invention.

Referring to FIG. 22, as new contents are registered in the cloud service device 200, the content viewing menu 50 provided to the terminal 100 may provide an image screen to which new contents, for example, contents A are added. Simultaneously, a new addition item 2110 may be displayed on a menu region 51 of the content viewing menu 50 to indicate addition of new contents. When the user selects the new addition item 2110, newly added contents A are converted into an image arranged at the center as illustrated in 2201 so that the content viewing menu 50 allows new contents to be more easily searched.

In this state, when the user generates an input signal for selecting newly added contents A, the terminal 100 may output a detailed screen image 2200 of corresponding contents as illustrated in a 2203. The detailed screen image 2200 may be provided on the content viewing menu 50 to be overlaid with a separate layer. In this state, if the user selects a predetermined item of a detailed screen image, an image effect associated with the new contents may be removed. If a selection of a detailed screen image of the contents A is performed, the contents A may be excepted from a newly added item. If the content A is excepted from a newly added item, an image effect provided to the contents A may be removed as illustrated in 2205. That is, the reference of other contents previously registered in the cloud service device 200 is equally applied to the contents A to be displayed.

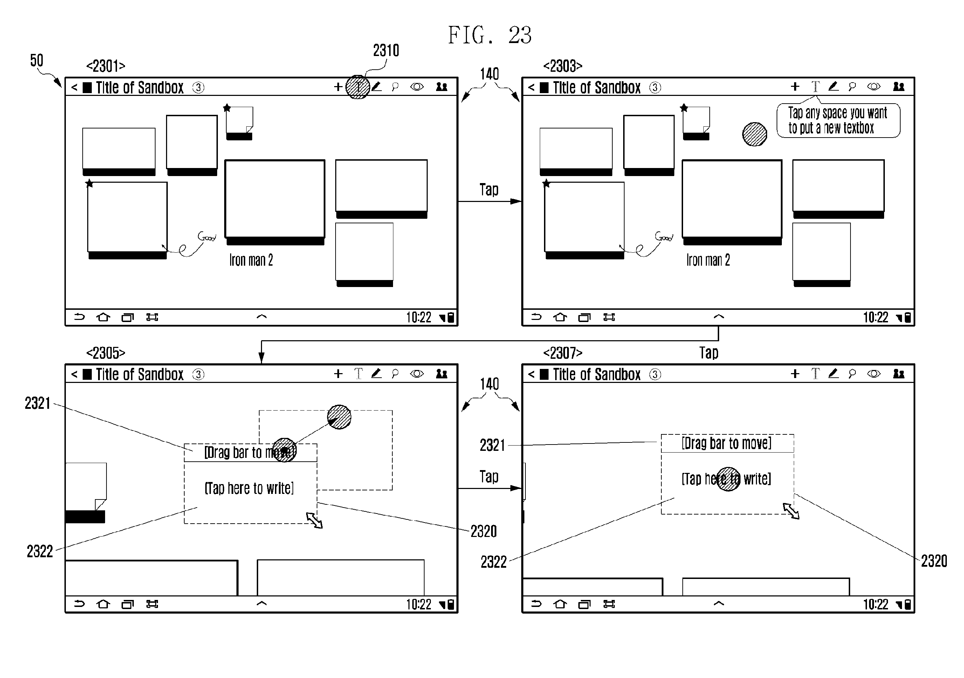

FIG. 23 is a diagram illustrating generation of a share message among a contents viewing function according to an exemplary embodiment of the present invention.

Referring to FIG. 23, the terminal 100 may display a content viewing menu 50 provided from the cloud service device 200 through a display unit 140 as illustrated in 2301. In this case, the user may generate an input signal for selecting a text item 2310 displayed on a menu region 51 in order to input a text message. Then, the terminal 100 may provide a content viewing menu 50 having an image enabling text input as illustrated in 2303. The user may generate a signal for designating a location of text input on the content viewing menu 50 for enabling a text input mode. Then, the terminal 100 may output a text input window 2320 at one side as illustrated in 2305. Here, the terminal 100 may enlarge a region in which the text input window 2320 is arranged in a zoom-in scheme to display the enlarged region so that text input may be easily confirmed. That is, the terminal 100 may arrange the text input window 2320 at the center of the screen and automatically enlarges and displays the text input window 2320 to have a predetermined size. The text input window 2320 may include a moving region 2321 supporting the movement of a corresponding region and a writing region 2322 capable of writing a text message. The user may control to arrange the text input window 2320 at a desired predetermined location by selecting the moving region 2321 as illustrated in 2307.

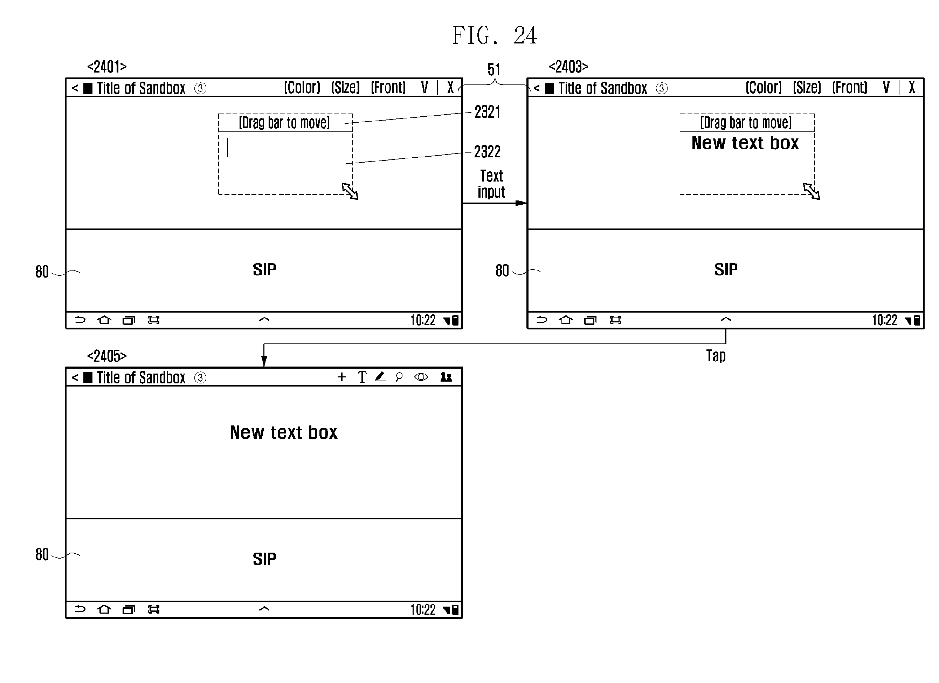

FIG. 24 is a diagram illustrating a procedure of inputting a text on the content viewing menu according to an exemplary embodiment of the present invention.

In the previous state 2307, the user may select a writing region 2322 to enter a text or a message. Then, the terminal 100 may a Simple Input Panel (SIP) area 80 including at least one key and at least one key map for text input at one side of screen as illustrated in 2401. For example, the terminal 100 may output a Qwerty key map at one side, for example, a bottom end of the screen as an SIP area 80.

The user selects keys of the SIP area 80 and combines characters to input a predetermined text, for example, "New text box" as illustrated in 2403. An input text may be outputted to a writing region 2322. Next, if a specific event or an input signal instructing completion of text input is generated, the terminal 100 may provide a content viewing menu to which the input text is applied as illustrated in 2405. Meanwhile, in order to support a color of a text during the foregoing text input procedure, a palette region capable of selecting a color to the SIP region 80 or the menu region 51 can be provided. A size region capable of controlling the size of a written text may be provided at one side of the menu region 51. A font region capable of adjusting a font of a written text may be also provided to the menu region 51.

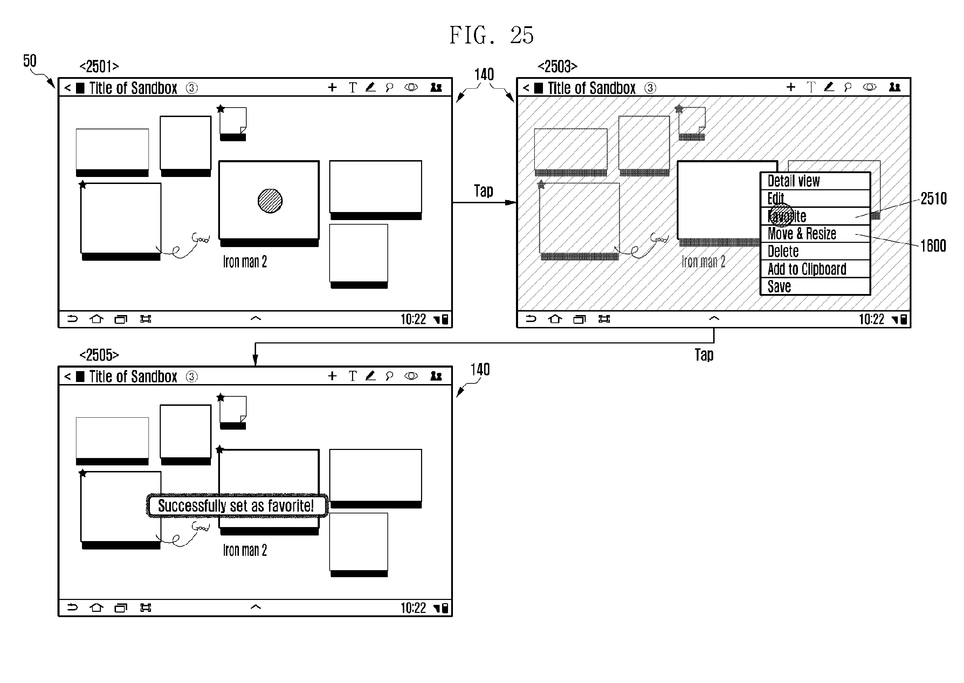

FIG. 25 is a diagram illustrating a preference display function on the content viewing menu according to an exemplary embodiment of the present invention.

Referring to FIG. 25, the terminal 100 may display a content viewing menu 50 on a display unit 140 as illustrated in 2501. In this state, the user may select specific contents to display and request a content control menu.

If specific contents are selected, the terminal 100 may output a content control menu 1600 including functions capable of being performed on the corresponding contents as illustrated in 2503. The user may generate an input signal for selecting a preference item 2510 from the content control menu 1600. Then, the terminal 100 may output an image effect indicating designation of a preference of a specific terminal user at one side of an image, for example, an image such as a star mark at a corner region of the corresponding contents as illustrated in 2505. Simultaneously, the terminal 100 may output a message indicating that designation of the preference is succeeded.

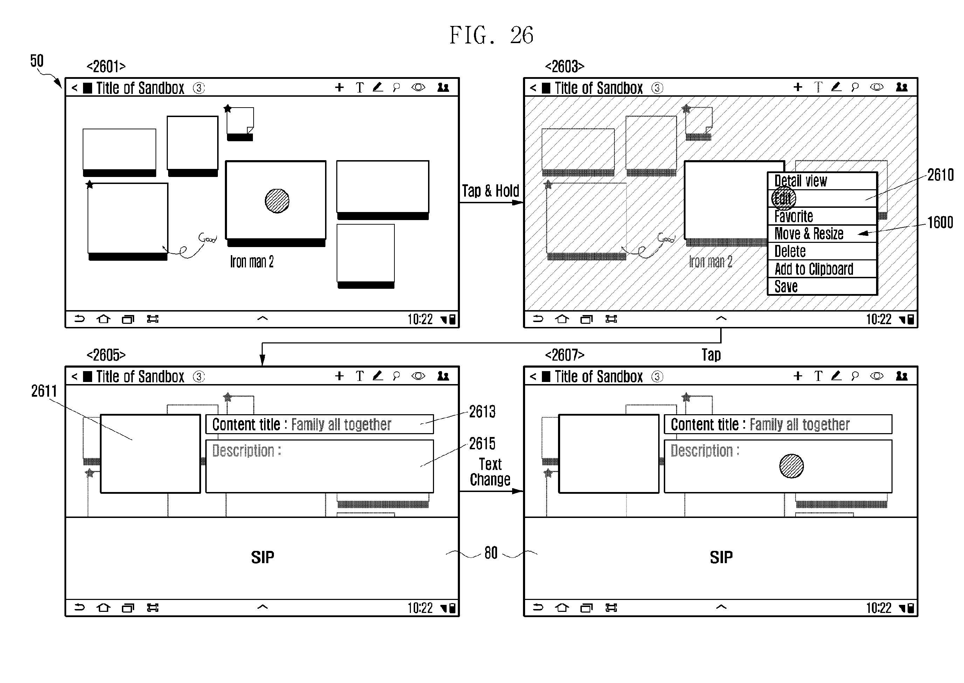

FIG. 26 is a diagram illustrating a procedure of input description information in contents on the content viewing menu according to an exemplary embodiment of the present invention.

Referring to FIG. 26, the terminal 100 may firstly output a content viewing menu 50 as illustrated in 2601. Further, when the user selects specific contents and requests a contents control menu 1600, the terminal 100 may output a content control menu 1600 as illustrated in 2603. In this case, the provided content control menu 1600 and the selected contents may be displayed to be classified by a separate layer.

The user may select an "Edit" item 2610 from a content control menu 1600 output on the screen 2603. If the user selects the "Edit" item 2610, the terminal 100 may output content edition region capable of editing description information of the corresponding contents on the display unit 140 as illustrated in 2605. That is, the terminal 100 may output a content edition region including an image region 2611, a title region 2613, and a description region 2615 of contents, and an SIP region 80 for input during a content editing procedure to one side of the screen. When the user selects the description region 2615 as illustrated in 2607, the terminal 100 may change the screen state capable of writing specific description information in a corresponding description region 2615.

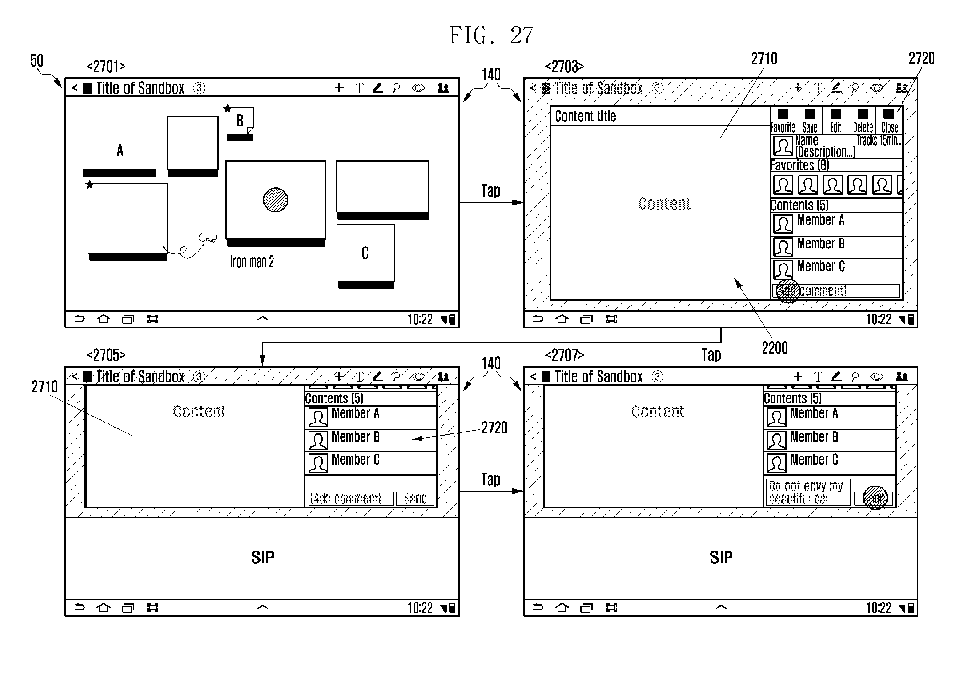

FIG. 27 is a diagram illustrating an interface displaying comments of a user on the content viewing menu according to an exemplary embodiment of the present invention.

Referring to FIG. 27, the terminal 100 may output the content viewing menu 50 as illustrated in 2701. In this step, when the user generates an input signal for selecting specific contents, particularly, when the user performs a control input for detailed view of the specific contents, the terminal 100 may output a detailed view 2200 of the corresponding contents to the display unit 140 as illustrated in 2703. The detailed view 2200 may include a detailed information display region 2710 for displaying information of selected contents in detail, and a contents addition information display region 2720 showing a comment with respect to the corresponding contents written by the users.

The user may generate an input signal for selecting an input region from the contents addition information display region 2720 to input the comment. Then, the terminal 100 may output an SIP region 80 for inputting the comment at one side as illustrated in 2705. The terminal 100 may resize the sizes of other regions, that is, a content detailed information display region 2710 and a content addition information display region 2720 while outputting the SIP region 80 or controls such that remaining regions are moved on the display unit 140 region corresponding to an arranged distance of the SIP region 80.

If the comment input is completed through the contents addition information display region 2720, the user may select a transmission item to request a corresponding comment to remain at corresponding contents to the cloud service device 200.

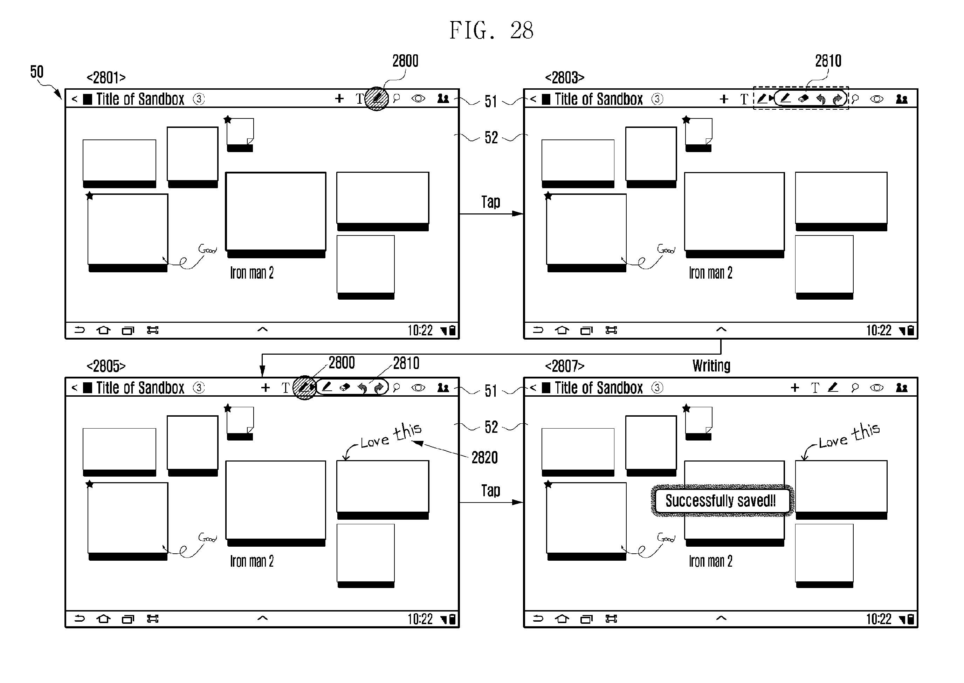

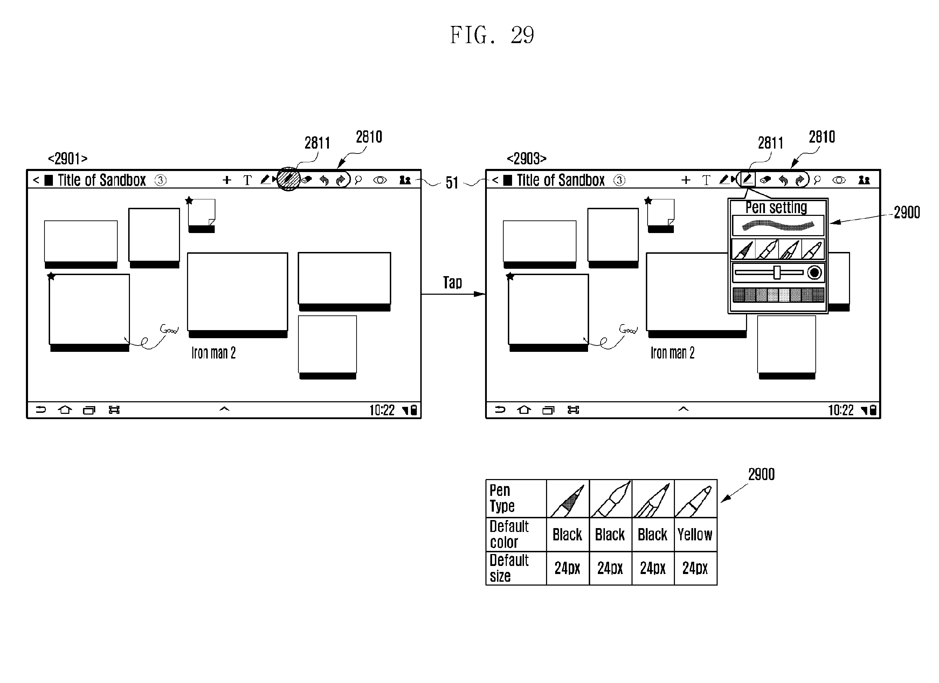

FIGS. 28 and 29 are diagrams illustrating a hand-writing input on the content viewing menu according to an exemplary embodiment of the present invention.

First, referring to FIG. 28, the terminal 100 may output a content viewing menu 50 to the display unit 140 as illustrated in 2801. In this state, in order to create memo contents in a note scheme, the user may select a hand-writing item 2800 provided for a memo creation function through a hand-writing scheme in a memo region 51. If the hand-writing item 2800 is selected, the terminal 100 may output a sub-menu item 2810 including specific sub-menus associated with hand-writing in the menu region 51 as illustrated in 2803. The sub-menu item 2810 may be output to a region other than the menu region 51, for example, the canvas region 52 according to a design scheme. Specific items such as an item for controlling characteristics of a line input by the pen, an eraser function, undo and redo items may be provided to the sub-menu item 2810, and corresponding items may be changed according to user setting or intention of a designer.

Meanwhile, the user may generate predetermine new memo contents 2820 at one side of the screen as illustrated in 2805 together with selection of the hand-writing item 2800 using a specific input tool, for example, an electronic pen. The screen 2805 represents a state of creating a text corresponding to "Love this" in specific contents in a hand-writing scheme. Next, when the user performs a control input for terminating creation of new memo contents 2820, the terminal 100 may output a message indicating that the new memo contents 2820 is successively generated as illustrated in 2807.

Meanwhile, referring to FIG. 29, the terminal 100 may provide the sub-menu item 2810 to the menu region 51 as illustrated in 2901 in order to generate memo contents based on hand-writing. In this state, the user may generate an input signal for selecting a line characteristic control item 2811 for controlling a characteristic of a line input by a pen. Then, the terminal 100 may output a characteristic control pop-up window 2900 capable of controlling a characteristic of a line as illustrated in 2903. The user may selectively select a color or a thickness of a line and a shape of the pen input through the characteristic control pop-up window 2900.

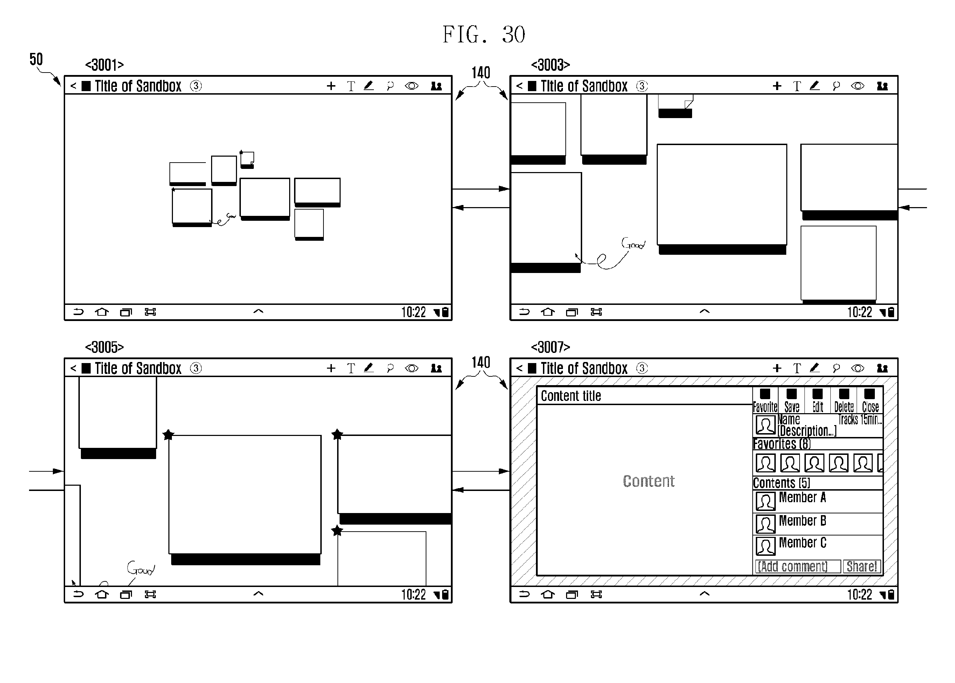

FIGS. 30 to 33 are diagrams illustrating a zoom function operation of the content viewing menu according to an exemplary embodiment of the present invention.

First, referring to FIG. 30, a terminal 100 may output a content viewing menu 50 to the display unit 140 as illustrated 3001. If the user performs a control input operation (e.g. key input, menu selection, etc.) for enlarging an image, the terminal 100 may enlarge and display the content viewing menu 50 as illustrated in 3003. If a control input for enlarging is again generated, the terminal 100 may output the enlarged image to the display unit 140 as illustrated in 3005. If the size of contents displayed by generating an additional enlargement control input is larger than a predetermined value, the terminal 100 may output a detailed view of at least one contents having the greatest ratio or having a predetermined ratio or greatest among contents currently output on the display unit 140 to the display unit 140 as illustrated in 3007.

Meanwhile, if an input signal for reducing the screen 3007 is generated, the screen may be restored to the screen 3005. If an input signal for reducing the screen 3005 is generated, the screen may be restored to the screen 3003. Although an input signal for reducing the screen is generated, the terminal 100 may control such that a reduction screen request less than a predetermined ratio is not provided. For example, although reduction input is generate in a screen 3001, the terminal 100 may disregard the reduction input request.

Meanwhile, the terminal 100 may change a type and an amount of information displayed according to variation in enlargement/reduction of the screen as well as size variation of the information. That is, when the screen is enlarged, the terminal 100 enlarges and displays information of the contents display region 61, and may vary an amount of information displayed on the contents information region 62.

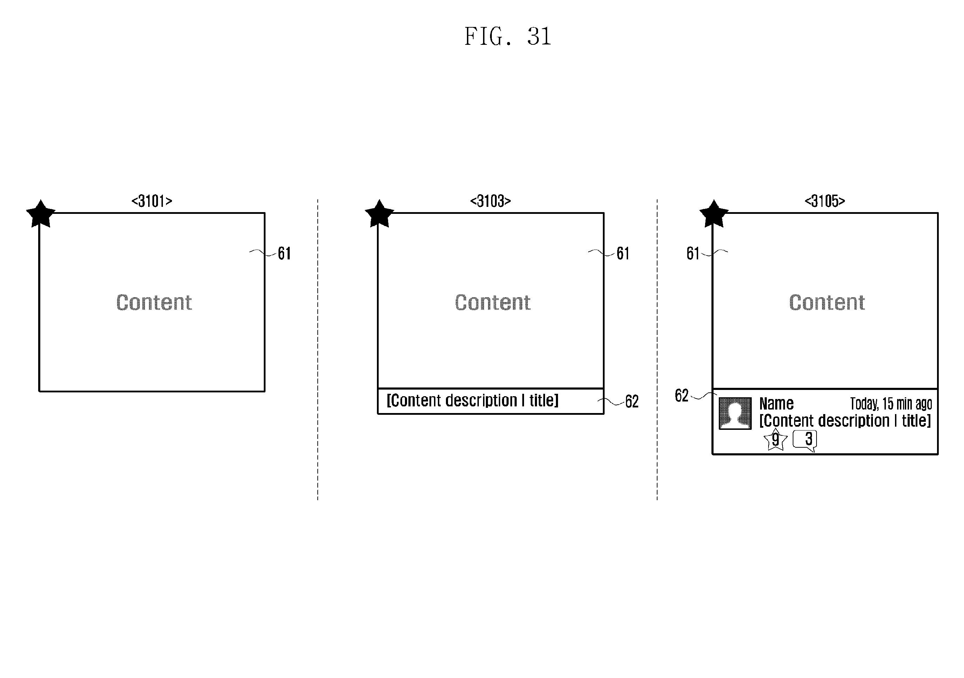

For example, when the contents is displayed to have a predetermined size or smaller as illustrated in 3101 of FIG. 31, the terminal 100 may display the contents while omitting the contents information region 62. Further, if an input signal for enlarging the content viewing menu 50 is generated, the terminal 100 may display a predetermined amount of information, for example, title information on the contents information region 62 as illustrated in 3103. Further, when an input signal for enlarging the content viewing menu 50 is additionally generated, the terminal 100 may display a large amount of information on the contents information region 62 as illustrated in 3105.

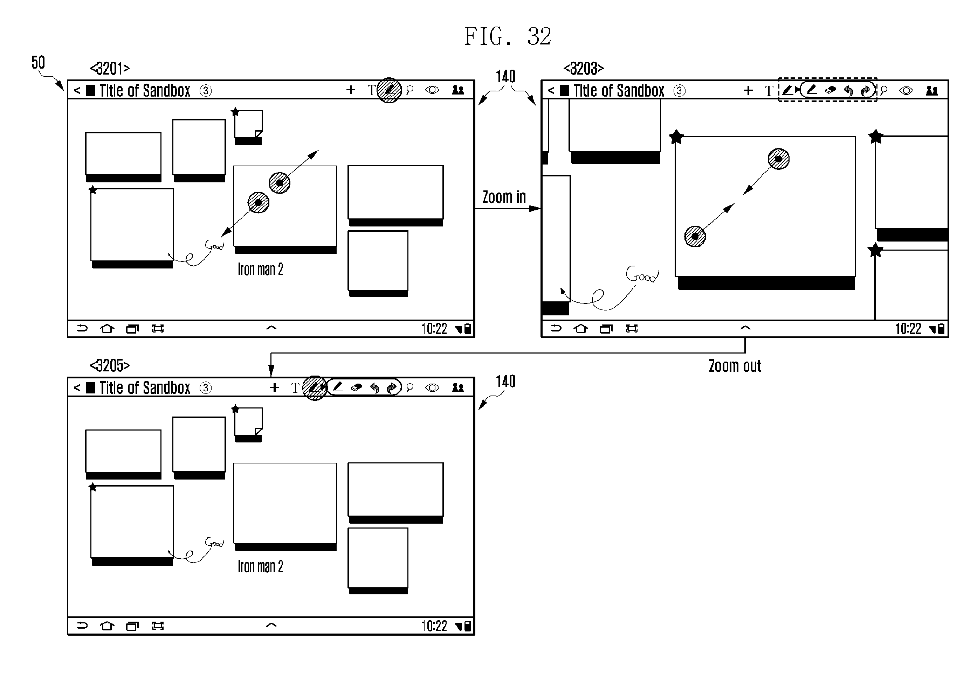

Further, as shown in FIG. 32, the content viewing menu 50 of the present invention may enlarge and reduce the image according to a pinch zoom input signal. If pinch zoom where two contact points of the display unit 140 including a touch panel is moved away from each other in generated in a state that the content viewing menu 50 is output as illustrated in a screen 3201, the terminal 100 may enlarge the image as illustrated in 3203 and may output the enlarged screen to the display unit 140.

If control input for reducing the screen in a state 3203, that is, pinch zoom where two contact points of the display unit 140 including a touch panel is moved adjacent to each other in generated, the terminal 100 may output a screen of a reduced state to the display unit 140 as illustrated in 3205.

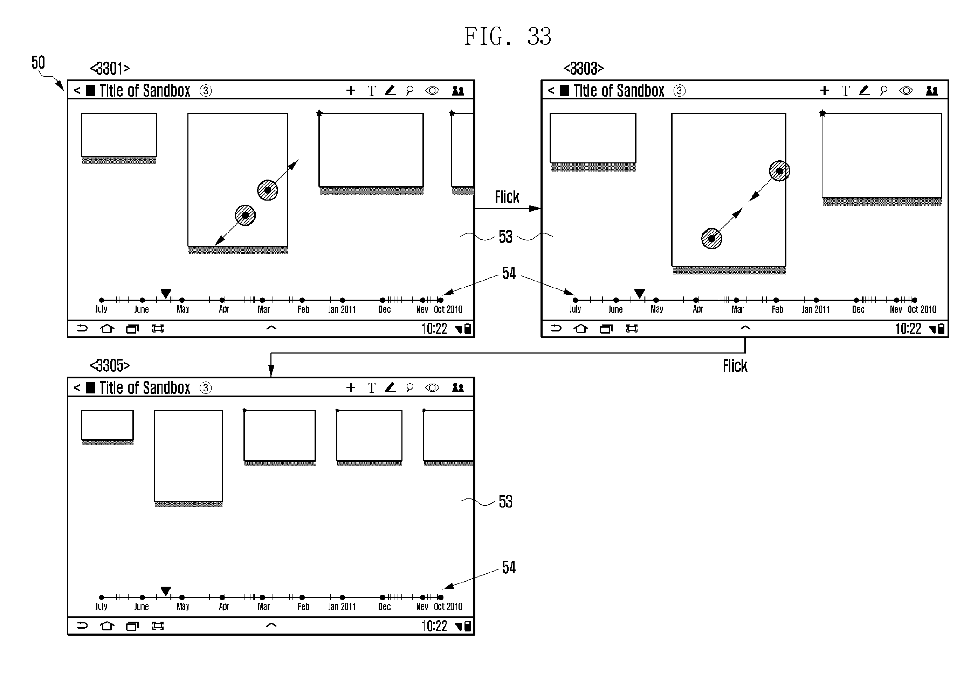

The foregoing screen zoom function is equally applicable to a timeline view type of a content viewing menu 50 as illustrated in FIG. 33. If pinch zoom for enlarging the screen is generated in a state that the timeline view type of the content viewing menu is outputted as illustrated in 3301, the terminal 100 may enlarge and display the screen as illustrated in 3303. If pinch zoom for reducing the image is generated as illustrated in 3303, the terminal 100 may control such that a reduced screen is displayed as illustrated in 3305. During this procedure, the terminal 100 controls the timeline region 54 not being affected by enlargement or reduction of the screen, and controls such that only the contents arrangement region 53 is applied to variation in the enlargement and the reduction of the screen.

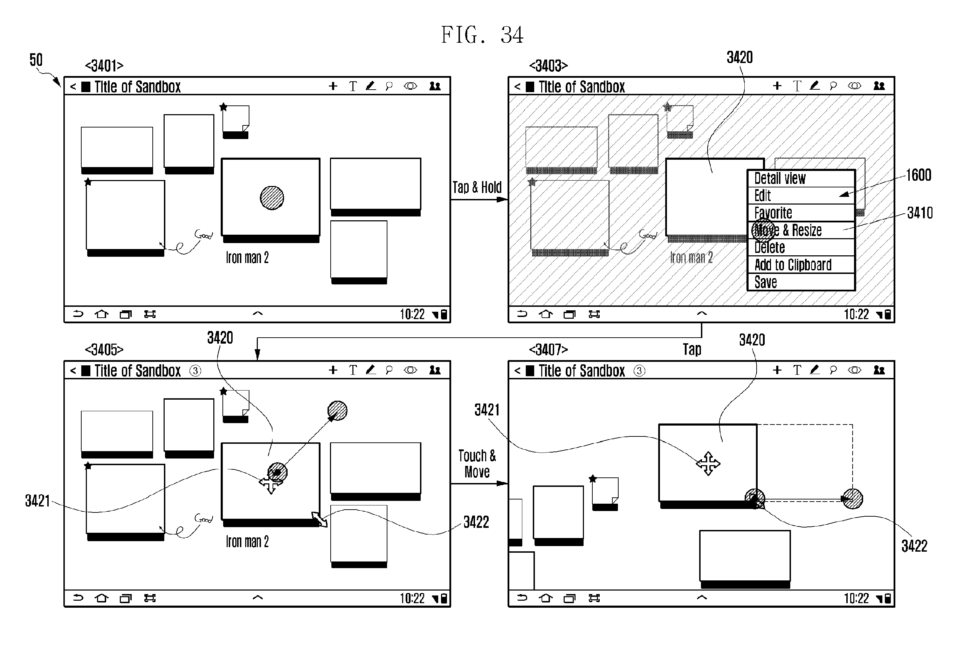

FIG. 34 is a diagram illustrating movement of contents on the content viewing menu according to an exemplary embodiment of the present invention.

Referring to FIG. 34, the terminal 100 may output the content viewing menu 50 as illustrated in 3401. When the user generates an input signal for selecting specific contents and requesting the content control menu 1600, the terminal 100 may output the content control menu 1600 to a region close to the contents as illustrated in 3403. The user may select a "Move & Resize" item 3410 among items included in the content control menu 1600.

Then, in order to perform a Move & Resize item 3410 from the content control menu 1600, the terminal 100 may display the selected contents 3420 in a state where movement or the size may be adjusted as illustrated in 3405. The user may recognize that execution of adjustment of movement or the size is prepared through change of a color or an image effect of the selected contents 3420. In this state, if the user generates a control input, for example, a touch event for designating the selected contents 3420 and then generates an event, that is, a Touch & Move event for moving the contents to a specific location, the terminal 100 may control such that the selected contents 3420 is moved as illustrated in 3407. In addition, the user may perform a control input for adjusting the size of the selected contents 3420 in a state 3407, and accordingly the terminal 100 adjusts the size of the selected contents 3420 and displays the adjusted contents 3420. The selected contents 3420 may include predetermined indicators 3421 and 3422 so that the movement and the size may be adjusted. That is, in order to guide movement of the selected contents 3420, an indicator 3421 of a cross arrow shape may be displayed at a central portion of the selected contents 3420. In order to guide the adjustment of the size of the selected contents 3420, an indicator 3422 having an oblique line arrow shape may be displayed at a corner region of the selected contents.

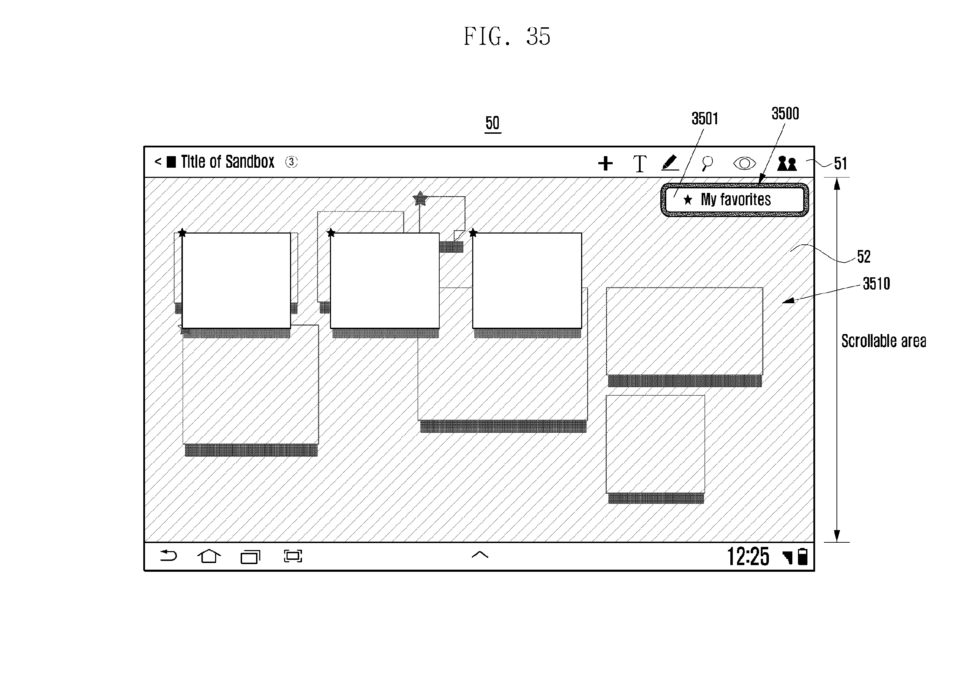

FIG. 35 is a diagram illustrating an example of an image on which a plurality of layers are stereoscopically displayed as the content viewing menu according to an exemplary embodiment of the present invention.

First, referring to FIG. 35, a content viewing menu 50 may be provided to include a menu region 51 and a canvas region 52 according to a displayed type as illustrated above. In this case, the content viewing menu 50 may provide a search region at a predetermined location according to a user request or set by a default. The search region 3500 supports such that contents stored in the cloud service device 200 may be searched and selected from various preset search words, or a search word may be input using the foregoing SIP region. When the search region 3500 is selected, a form of providing various search words provides preset words in a form of a list, and may support a search function in a scheme of receiving a specific search word according to designation of the user.

For example, may favorites may be input as illustrated in the search region 3500. Contents to which the preference are set may be contents having may favorites designated by a user of a terminal 100 among contents stored in the cloud service device 200. In this case, an image effect or an icon 3501 used to designate the preference may be simultaneously input, and the user may search contents having may favorites using at least one of input of the icon 3501, selection of a search word, and input of the search word. A contents search result 3510 may be separately displayed on the content viewing menu 50 by a predetermined layer.

The contents search result 3510 may be provided as a scrollable region, and may display contents searched according to a predetermined display standard. For example, the cloud service device 200 or the terminal 100 displays contents having preference in such a way that contents having preference designated by a user of a terminal 100 may be preferentially displayed. Further, in a case of contents having the same favorites, the newest contents may be preferentially displayed. The contents having the same preference may be contents designated by users. A text box matching with a search input is displayed as a next order, and remaining search results may be displayed in the newest order. That is, the contents search result 3510 display contents in such a way that contents such as a photograph or a moving image are preferentially displayed, and a text or a memo is displayed as a next order. Some information, for example, only description information or title information may be written in an information region of contents displayed on the contents search result 3510.

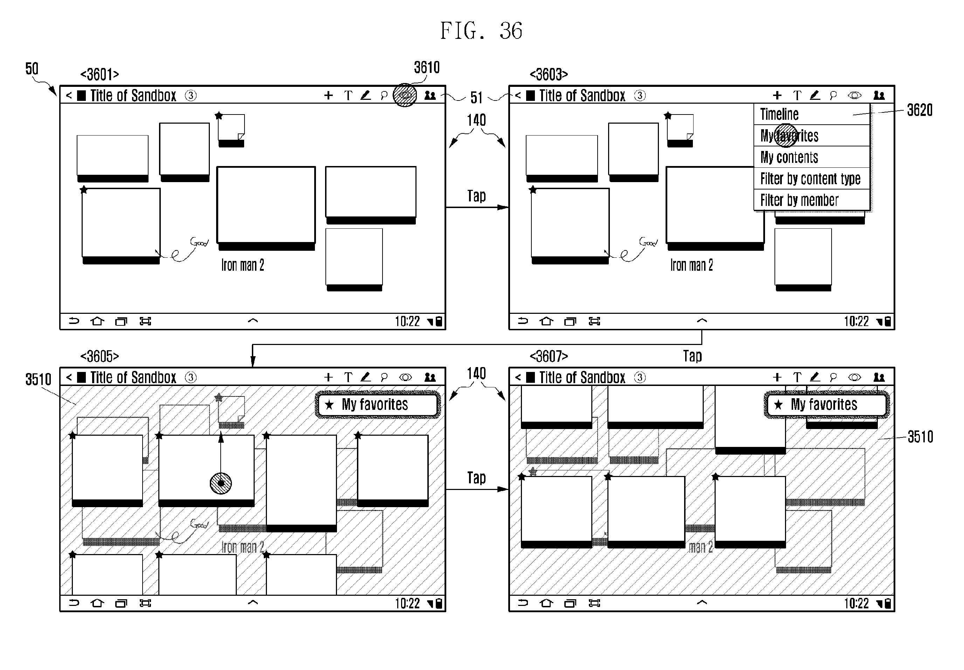

FIG. 36 is a diagram illustrating an operation of a contents search result 3510 shown in FIG. 35.

Referring to FIG. 36, if a content viewing menu 50 is received and output as illustrated in 3601, the user may select a search item 3610 from the menu region 51. Then, the terminal 100 may output a search word selection window 3620 capable of selecting preset search words according to selection of the search item 3610 as illustrated in 3603. When the user selects a preference item from the search word selection window 3620, the terminal 100 may provide contents having the preference to a separate layer in a contents search result 3510 as illustrated in 3605. The contents search result 3510 provided to the screen 3605 may be output according to a contents display standard illustrated in FIG. 35. Meanwhile, the user may generate a touch event for moving a content search result 3510. Accordingly, the terminal 100 may move the contents search result 3510 and controls the display unit 140 to display the moved contents search result 3510 as illustrated in 3607.

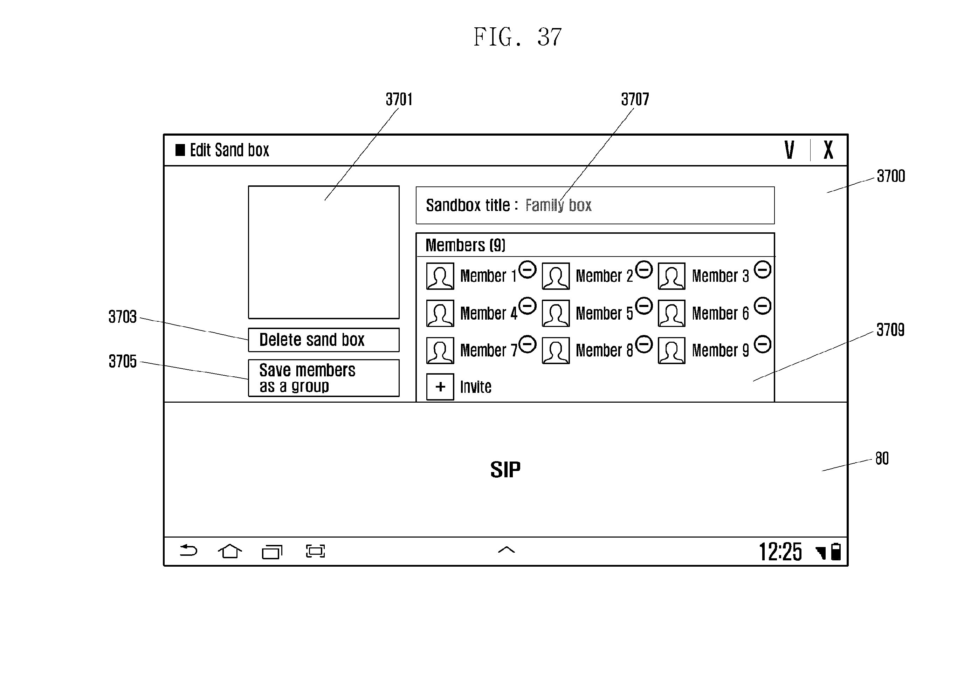

FIG. 37 is a diagram illustrating an interface for describing a sandbox edition according to an exemplary embodiment of the present invention.

Meanwhile, the sandbox may be a configuration corresponding to a sharing region stored in the cloud service device 200 corresponding to the foregoing content viewing menu. That is, the user may operate at least one sandbox through the cloud service device 200, and at least one user connects with each sandbox to upload or download contents or create memo contents. In this case, in order to use each sandbox, the foregoing content viewing menu may be provided. As a result, contents included in the content viewing menu may be differently configured according to a type of the sandbox. Support of a content viewing menu function may be commonly provided by the foregoing schemes.

Referring to FIG. 37, a terminal 100 may provide an interface for adjusting a characteristic of a sandbox. The sandbox may be a storage region allocated for a contents sharing service provided from the cloud service device 200. A plurality of sandboxes may be provided, and each sandbox may be limited by users with which an operator may connect. Meanwhile, in order to adjust a characteristic of the sandbox, the terminal 100 may output a sandbox characteristic control box 3700 as shown to the display unit 140. As shown, the sandbox characteristic control box 3700 may include an icon image region 3701 representing a sandbox, a deletion button region 3703 supporting such that the sandbox is deleted, a phone book group creation button region 3705 supporting such that a user list subscribed in the sandbox is created as a separate group of a phone number, a sandbox title region 3707, and a user deletion and addition region 3709. The sandbox characteristic control box 3700 may further include an SIP region 80 to edit the foregoing regions.

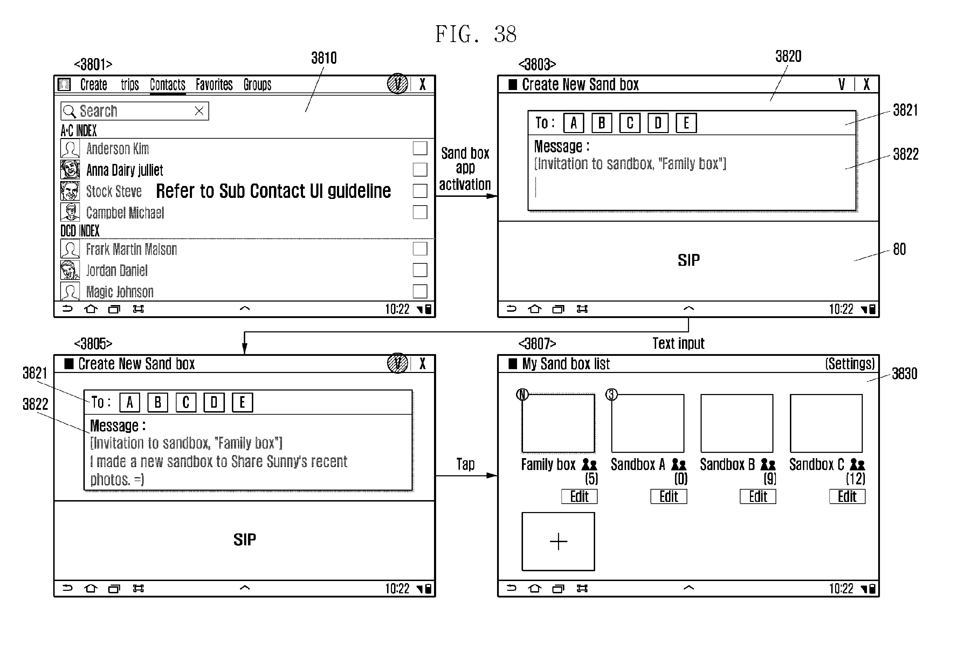

FIG. 38 is a diagram illustrating user addition for generating a sandbox according to an exemplary embodiment of the present invention.

Referring to FIG. 38, in a state that a connection information image 3810 displaying phone-book information or contact information is output as illustrated 3801, in order to invite a specific user as a sandbox user to be newly created, an operator or a manager of a corresponding cloud service device 200 may activate a sandbox application using the terminal 100. To this end, an item for activating the sandbox application may be provided to one side of the connection information image 3810. If a sandbox application activation item is selected, the terminal 100 may output an invitation image 3820 to the display unit 140 as illustrated in 3803. The invitation image 3820 may include a receiver region 3821 in which at least one user selected from the connection information image is written and a particulars region 3822 in which invitation particulars are written. Further, the invitation image 3820 may include an SIP region 80. If the user writes particulars using the SIP region 80, the corresponding particulars may be displayed on the particulars region 3822 as illustrated in 3805. Further, if an input signal indicating creation of the sandbox on screen 3805, the terminal 100 creates a new sandbox as illustrated in 3807 and may accordingly provide the created new sandbox to the sandbox list 3830. The new sandbox provided to the sandbox list 3830 may provide an image effect different from that of other sandboxes. For example, the new sandbox may provide an image effect indicating that the sandbox is newly created at a predetermined location. Meanwhile, the sandbox list 3830 may simply represent information about users who currently connect with other sandboxes. For example, information indicating the number of users currently connecting with a corresponding sandbox may be output to a specific sandbox of the sandbox list 3830. The number of users currently connecting with a corresponding sandbox may be distinguished from the total available number of a corresponding sandbox. In order to establish the new sandbox and provide information associated therewith, the terminal 100 may provide or receive corresponding information to or from the cloud service device 200. The information may be provided according to allowance of the cloud service device 200.

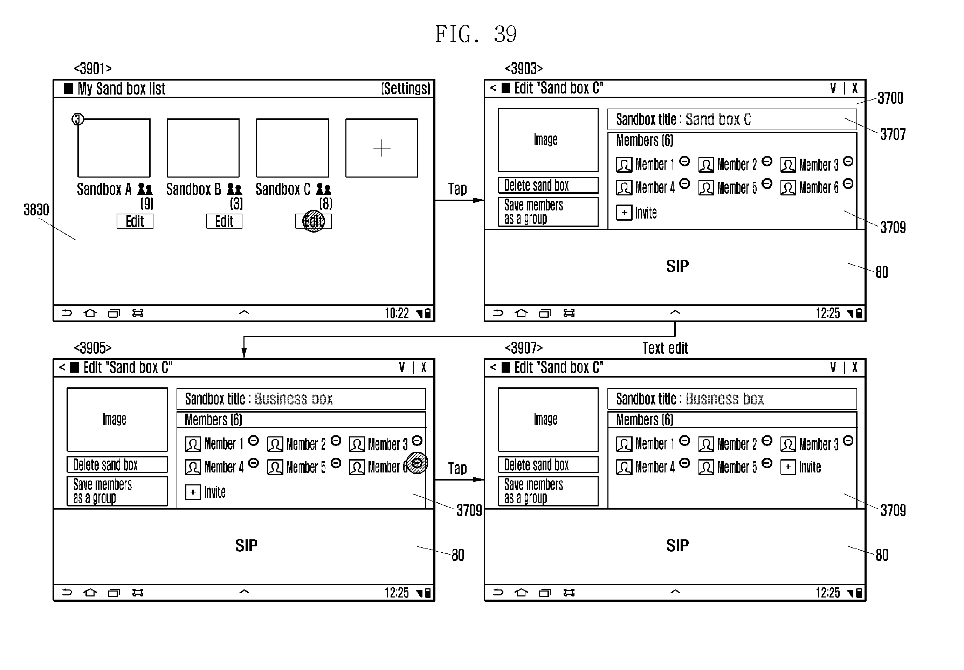

FIG. 39 is a diagram illustrating change of a sandbox according to an exemplary embodiment of the present invention.

Referring to FIG. 39, the terminal 100 may output a sandbox list 3830 similar to 3901 which represent a state that a specific user opens three sandboxes. An icon having no separate title in the sandbox list 3830 may be used to establish a new sandbox.

Meanwhile, if a user of the terminal 100 selects a specific sandbox, for example, an edition button of Sandbox C, the terminal 100 may output a sandbox characteristic control screen 3700 on the display unit 140 as illustrated in 3903. In this case, the user selects a title region 3707 from the sandbox characteristic control screen 3700, and inputs a specific title, for example, "Business box" using an SIP region 80. Then, the sandbox characteristic control screen 3700 may change a title region 3707 as illustrated in 3905.

Meanwhile, in order to remove available users from the corresponding sandbox, the user may perform an input operation deleting a specific user using a user deletion and addition region 3709 of the sandbox characteristic control screen 3700. Then, the terminal 100 may display the user deletion and addition region 3709 from which a specific user is deleted as illustrated in 3907. To this end, the terminal 100 may create a message for deleting a specific user from the corresponding sandbox and provide the created message to the cloud service device 200. Then, the cloud service device 200 deletes a corresponding user from the specific sandbox. Further, the cloud service device 200 may transmit a message guiding that a user is excluded from a corresponding sandbox according to a design scheme of a system to a user terminal.

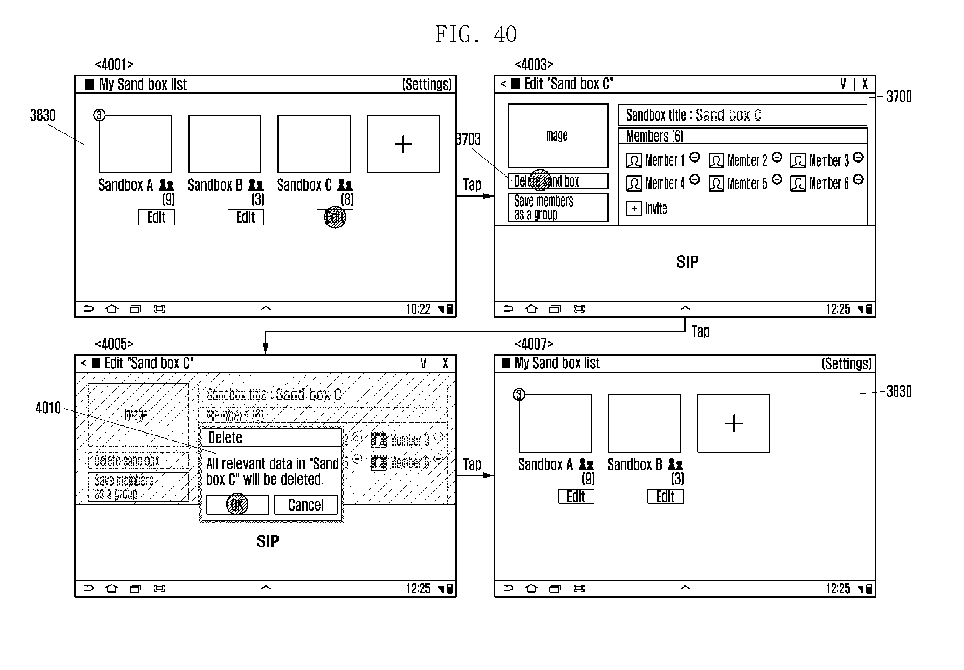

FIG. 40 is a diagram illustrating deletion of a sandbox according to an exemplary embodiment of the present invention.

Referring to FIG. 40, first, the terminal 100 may output a sandbox list 3830 on the display unit 140 as illustrated in 4001. In this case, when the user selects an edition button for editing a Sandbox C, the terminal 100 may output a sandbox characteristic control screen 3700 for controlling a characteristic of the selected sandbox on the display unit 140 as illustrated in 4003.

Meanwhile, the user may perform a control input for selecting a deletion button region 3703 to delete a corresponding sandbox. Then, the terminal 100 may receive an input according to selection of a deletion button region 3703, and outputs a confirmation window 4010 for confirming deletion of a corresponding sandbox as illustrated in 4005. The confirmation window 4010 prevents selection of the deletion button region 3703 due to mistake of a user, which may be omitted. Meanwhile, the confirmation window 4010 may guide variation due to deletion of the sandbox. In this case, the provide guide message may be change by a designer of a system. If deletion of the sandbox is completed, the terminal 100 may output a sandbox list 3830 from which a selected Sandbox C is excluded for deletion on the display unit 140 as illustrated in 4007.

Meanwhile, when a sandbox operator deletes the sandbox, a message about deletion of a corresponding sandbox may be provided to users included in a corresponding sandbox. Further, when an acceptance ratio with respect to deletion of the sandbox of users is greater than a predetermined value, the cloud service device 200 may delete a corresponding sandbox. That is, in order to delete the sandbox, the cloud service device 200 may support a vote function. The cloud service device 200 may entrust a specific user or terminal with a sandbox operation right. Accordingly, if an operator or a user or a terminal having a specific right fails deletion of the sandbox, a corresponding sandbox operation right may be entrusted to another user or terminal. The sandbox operation right may be provided based on a specific user, but may be provided based on unique identification information of a specific terminal according to policy of the cloud service device 200. That is, the sandbox function of the present invention allows various users to use a corresponding sandbox or provide an operation right using one terminal.

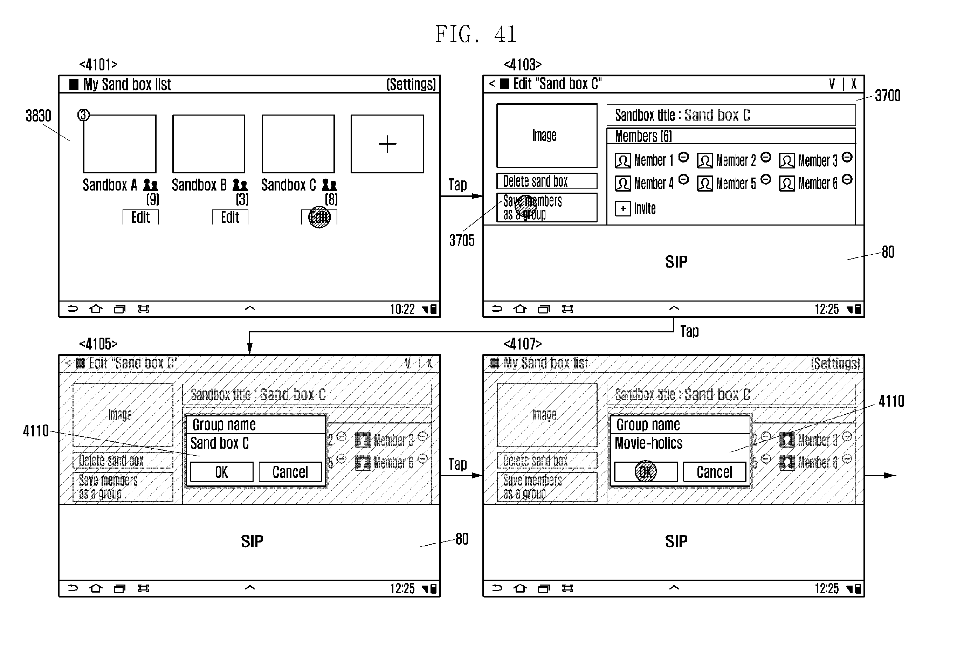

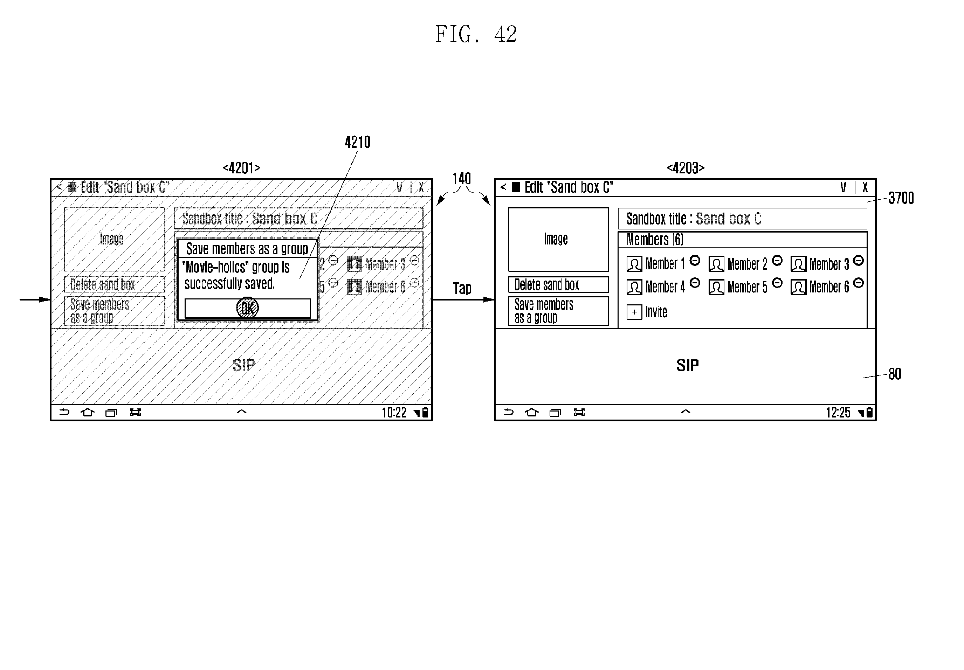

FIGS. 41 and 42 are diagrams illustrating change execution of a sandbox group name according to an exemplary embodiment of the present invention.

First, referring to FIG. 41, the terminal 100 may output a sandbox list 3830 to a display unit 140 as illustrated in 4101 according to reception of a user control input. In addition, when the user selects an edition button for editing Sandbox C, the terminal 100 may output a sandbox characteristic control screen 3700 for controlling a characteristic of the selected sandbox to the display unit 140 as illustrated in 4103. If the phone book group creation button region 3705 is selected, the terminal 100 may output a group creation window 4110 creating a new phone book group as illustrated in 4105. Meanwhile, the terminal 100 outputs the group creation window 4110 and may control such that an SIP region 80 provided from the sandbox list 3830 maintains in order to change a group name. When the user changes "Sandbox C" to another group name, for example, "Movie-holics", the terminal 100 provides change of the group name to the group creation window 4110 as illustrated in 4107, and newly creates and stores a corresponding phone book group according to the completion of the change.

Meanwhile, if a control input for completing change of a group name in 4107 of FIG. 41, the terminal 100 may output a guide window 4210 guiding that a name of the phone book group has "Movie-holics" and is stored to the display unit 140 as illustrated in 4201. If confirmation of a corresponding guide window 4210 is completed, the terminal 100 may output a previous state, for example, a sandbox characteristic control screen 3700 to the display unit 140 as illustrated in 4203.

As described above, the method and the system for supporting a cloud service according to the embodiment of the present invention reads contents in using a cloud service or easily operates a sandbox sharing contents in a state that predetermines users are designated as a sharing group. Accordingly, the method and the system for supporting a cloud service according to the embodiment of the present invention can satisfy various requests of the user in using a cloud service.

As mentioned above, the method and the system for supporting a cloud service and the terminal for supporting the same according to the embodiment of the present invention, the present invention can provide various contents stored in the cloud service device to have a desired form by a user and to have a form which the user can easily access, and can variously control a corresponding service environment according to a request of the user. Accordingly, the present invention allows a user to easily use a cloud service, and to generate and share new contents.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

Although exemplary embodiments of the present invention have been described in detail hereinabove, it should be clearly understood that many variations and modifications of the basic inventive concepts herein taught which may appear to those skilled in the present art will still fall within the spirit and scope of the present invention, as defined in the appended claims.

## Claims

1. A system for supporting a cloud service, the system comprising:
a cloud service device allowing access by a plurality of terminal users to upload or download different contents to or from at least one sharing box having a sharing region; and
a terminal, in communication with the cloud service device, receiving and outputting a content viewing menu displaying the contents stored in the cloud service device according to types and characteristics of the contents and manipulating the contents according to an input event.

2. The system of claim 1, wherein the terminal outputs at least one of:
a canvas type content viewing menu including a canvas region where the contents are arranged and a menu region displaying menu items; and
a timeline type content viewing menu including a content arrangement region where the contents are arranged according to origination times and a timeline region indicating time information when the arranged contents are created.

3. The system of claim 1, wherein the terminal displays a content control menu including at least one of a detailed view item, a preference item, a movement and size control item, a deletion item, and a download and clip board addition item of specific contents output on the content viewing menu.

4. The system of claim 3, wherein at least one of the items included in the content control menu is inactivated or is excluded from the content control menu according to a characteristic of contents or a grade registered in the cloud service device.

5. The system of claim 1, wherein the content viewing menu displays at least one newly added content distinguished from previously stored contents, controls a screen in such a way that the at least one newly added content is arranged at a central portion of the screen, and controls the screen such that points in which respective contents are located are sequentially arranged at the central portion of the screen.

6. The system of claim 1, wherein the content viewing menu performs a zoom-in function or a zoom-out function of a screen according to a control input, and distinctively displays at least one of an amount of additional information and a type of addition information of the displayed contents according to a predetermined enlargement ratio.

7. The system of claim 1, wherein when the content viewing menu is enlarged to a size greater than a predetermined value, the contents viewing menu is converted into a detail view image screen of specific contents.

8. The system of claim 1, wherein the terminal displays a content search result image to be overlaid on the content viewing menu in response to a search of a particular content.

9. The system of claim 1, wherein the terminal outputs a sandbox list image configured by a plurality of sandboxes corresponding to a plurality of sharing regions in which the contents are stored,
wherein the contents includes an image effect indicating at least one of a music file, a memo file, a photograph file, and a moving image file.

10. The system of claim 9, wherein the terminal outputs a sandbox characteristic control image comprising at least one of a button for deleting a specific sandbox displayed on the sandbox list, a title region of the specific sandbox, a button storing a phone book of users included in the specific sandbox as a separate group, and a user deletion and addition region for deleting a user included in the sandbox or inviting a new user.

11. A method of controlling a user environment in a cloud service, the method comprising:
allowing an access by a plurality of terminals to upload or download different contents to or from at least one sharing box of a cloud service device; and
providing a content viewing menu displaying the contents according to types and characteristics thereof in the plurality of terminals to manipulate the displayed contents according to an input event.

12. The method of claim 11, wherein the providing of the content viewing menu outputs at least one of:
a canvas type content viewing menu including a canvas region where the contents are arranged and a menu region displaying menu items; and
a timeline type content viewing menu including a content arrangement region where the contents are arranged according to origination times and a timeline region indicating time information when the arranged contents are created.

13. The method of claim 11, further comprising displaying a content control menu including at least one of a detailed view item, a preference item, a movement and size control item, a deletion item, and a download and clip board addition item of specific contents output on the content viewing menu,
wherein at least one of the items included in the contents control menu is inactivated or is excluded from the content control menu according to a characteristic of contents or a grade registered in the cloud service device.

14. The method of claim 11, wherein the providing of the content viewing menu comprises at least one of:
displaying at least one newly added content distinguished from previously stored contents
controlling a screen in such a way that the at least one newly added content is arranged at a central portion of the screen when a new addition item provided to search added content is selected;
controlling the screen such that points in which respective contents are located are sequentially arranged at the central portion of the screen when the new addition item is selected in order to search a plurality of added contents;
performing a zoom-in function or a zoom-out function of the screen according to a control input, and distinctively displaying at least one of an amount of additional information and a type of addition information of the displayed contents according to an enlargement ratio;
converting the content viewing menu into a detail view image of specific contents when the content viewing menu is enlarged to a size greater than a predetermined value or when a size ratio of the specific contents displayed on the content viewing menu is equal or greater than the predetermined value; and
displaying a contents search result to be overlaid on the content viewing menu in response to a search of a particular content.

15. The method of claim 11, further comprising at least one:
outputting a sandbox list configured by a plurality of sandboxes corresponding to a plurality of sharing regions in which the contents are stored in order to provide the content viewing menu;
outputting a sandbox characteristic control screen comprising at least one of a button for deleting a specific sandbox displayed on the sandbox list, a title region of the specific sandbox, a button storing a phone book of users included in the specific sandbox as a separate group, and a user deletion and addition region for deleting a user included in the sandbox or inviting a new user; and
authenticating a use or operation right of the sandbox by the plurality of terminals.
